# EUROPEAN PATENT APPLICATION

(11) **EP 4 636 638 A1**
(43) Date of publication of application: **22.10.2025**
(21) Application number: 25168533.5
(22) Date of filing: 04.04.2025
(51) Int. Cl.: G06F 30/17, G06F 30/20, G06F 111/10, G06F 113/26

(54) **METHODS FOR ANALYZING TOW LAYUP DESIGNS OF UNITARY COMPOSITE STRUCTURES WITH CLOSED END GEOMETRIES**

(30) Priority: 15.04.2024 US 202418635213
(71) Applicant: The Boeing Company, Arlington, VA 22202 (US)
(72) Inventor: Goldberg, James D., Arlington, 22202 (US); Winfree, Troy, Arlington, 22202 (US)
(74) Representative: Arnold & Siedsma

(57) **Abstract**

A method for analyzing a tow layup design of a unitary composite structure with a closed end geometry includes: (1) receiving a design data file for the tow layup design of the unitary composite structure with the closed end geometry from a design data file repository via a communication network and a network interface to a computing device; (2) processing the design data file at the computing device to construct a 3-dimensional model of the unitary composite structure; (3) analyzing the 3-dimensional model at the at least one computing device to assess modulus characteristics of the tow layup design; and (4) generating modulus results data reflecting the modulus characteristics of the tow layup design for the unitary composite structure at the computing device based on the analyzing of the 3-dimensional model. Various examples of methods for analyzing tow layup designs of unitary composite structures with closed end geometries are disclosed.

## Description

### FIELD

The present disclosure relates generally to techniques for analyzing tow layup designs and, particularly, to techniques for analyzing designs of unitary composite structures with closed end geometries. The various techniques include analysis of a 3-dimensional model of the unitary composite structure based on the tow layup design. The unitary composite structure may also include an elongated hollow body. For example, the closed end geometry may include a dome. Other geometries for the closed end are also contemplated. The elongated hollow body may include a cylinder. Other geometries for the elongated hollow body are also contemplated. The elongated hollow body and the closed end geometry are joined at a transition region.

### BACKGROUND

Current designs for composite structures that include a cylinder and an integrated dome use a sequentially terminating scarf which yields restrictive placement of dome fibers. This causes high variability in moduli and "soft spots" (i.e., low Ex).

Accordingly, those skilled in the art continue with research and development efforts to improve techniques for analyzing designs for unitary composite structures with domes.

### SUMMARY

Disclosed are examples of methods for analyzing tow layup designs of unitary composite structures with a closed end geometries. The following is a non-exhaustive list of examples, which may or may not be claimed, of the subject matter according to the present disclosure.

In an example, a disclosed method, such as a computer-implemented method, for analyzing a tow layup design of a unitary composite structure with a closed end geometry includes: (1) receiving a design data file for the tow layup design of the unitary composite structure with the closed end geometry from a design data file repository via a communication network and a network interface to at least one computing device; (2) processing the design data file at the at least one computing device to construct a 3-dimensional model of the unitary composite structure; (3) analyzing the 3-dimensional model at the at least one computing device to assess modulus characteristics of the tow layup design; and (4) generating modulus results data reflecting the modulus characteristics of the tow layup design for the unitary composite structure at the at least one computing device based on the analyzing of the 3-dimensional model.

The method may further comprise: determining a first measure of goodness for the modulus results data based on the design data file; repeating the receiving, the processing, the analyzing and the generating for a second tow layup design of the unitary composite structure and a second design data file to generate second modulus results data based on the second design data file; determining a second measure of goodness for the second modulus results data based on the second design data file; comparing the second measure of goodness to the first measure of goodness; and selecting an optimized tow layup design for the unitary composite structure from the tow layup design and the second tow layup design based on the comparing. Preferably, the first measure of goodness and the second measure of goodness comprise at least one of an isotropic measure over the 3-dimensional model or a portion thereof, a variance measure of laminate properties over the 3-dimensional model or a portion thereof and a modulus measure of a select characteristic over the 3-dimensional model or a portion thereof.

The unitary composite structure may comprise: an elongated hollow body; the closed end geometry; and a transition region between the elongated hollow body and the closed end geometry. Preferably, the tow layup design comprises: an elongated body layup design comprising a first design data section within the design data file defining multiple sets of elongated body plies for tow layup of the elongated hollow body; a closed end layup design comprising a second design data section within the design data file defining more than one set of end plies for tow layup of the closed end geometry; and a transition layup design comprising a third design data section within the design data file defining integration of the elongated body plies and the end plies. Preferably, the elongated hollow body comprises at least one of a cylinder, a pipe, a tube, a cylindrical body, an ellipsoidal body and a contoured body.

The closed end geometry may comprise at least one of a dome, a hemispherical dome, an elliptical dome, a semi-elliptical head, a torispherical head and a dished head.

The unitary composite structure may comprise an elongated hollow body, the closed end geometry and a transition region between the elongated hollow body and the closed end geometry, wherein the elongated hollow body extends longitudinally along an x-axis and a circumference defines a y direction, the design data file comprising: a first design data section defining multiple sets of elongated body plies for tow layup of the elongated hollow body; a second design data section defining more than one set of end plies for tow layup of the closed end geometry; and a third design data section defining integration of the elongated body plies and the end plies in the transition region.

Preferably, the first design data section comprises: a set of geometrical dimensions for an elongated body surface of a mandrel used for tow layup of the elongated body plies, the elongated body surface associated with the elongated hollow body of the unitary composite structure; a location of an elongated body reference axis on the elongated body surface to define a zero-degree fiber angle for the elongated body plies; and an elongated body fiber angle for each set of elongated body plies in relation to the elongated body reference axis, wherein preferably the elongated body fiber angle for each set of elongated body plies is based on a relative distribution of elongated body plies at 0 degrees, 45 degrees, -45 degrees.

Preferably, the second design data section comprises: a set of geometrical dimensions for an end surface of a mandrel used for tow layup of the end plies, the end surface associated with the closed end geometry of the unitary composite structure; a location of an end polar reference axis on the end surface to define a zero-degree fiber angle for the end plies; and an end fiber angle for each set of end plies in relation to the end polar reference axis. Optionally, the end fiber angle for each set of end plies is based on 180 degrees divided by a quantity of end plies within the corresponding set of end plies, preferably wherein: the quantity of end plies within the corresponding set of end plies comprises at least one of two end plies, three end plies, four end plies, five end plies, six end plies, eight end plies, nine end plies and ten end plies; and/or the end fiber angle for the corresponding set of end plies comprises at least one of 90 degrees to 60 degrees, 60 degrees to 45 degrees, 45 degrees to 36 degrees, 36 degrees to 30 degrees, 30 degrees to 22.5 degrees, 22.5 degrees to 20 degrees, 20 degrees to 18 degrees and less than 18 degrees.

Preferably, the third design data section comprises: a set of geometrical dimensions for a transition region surface of a mandrel used for integrated tow layup of the elongated body plies and the end plies, the transition region surface associated with the transition region of the unitary composite structure; a location of an elongated body reference axis on an elongated body surface to define a zero-degree fiber angle for the elongated body plies; an elongated body fiber angle for each set of elongated body plies in relation to the elongated body reference axis; identification of elongated body plies within each set of elongated body plies that extend into the transition region; physical dimensions for portions of the elongated body plies within each set of elongated body plies that extend into the transition region; a location of an end polar reference axis on an end surface to define a zero-degree fiber angle for the end plies; an end fiber angle for each set of end plies in relation to the end polar reference axis; identification of end plies within each set of end plies that extend into the transition region; and physical dimensions for portions of end plies within each set of end plies that extend into the transition region. Preferably, the elongated body plies that extend into the transition region and the end plies that extend into the transition region form a joint within the transition region, optionally wherein the joint within the transition region comprises at least one of a scarf joint, a double scarf joint, an overlap joint, a butt joint, a series of joints, a series of joints at a common longitudinal location and a series of joints at staggered longitudinal locations. Preferably, at least a portion of the elongated body plies that extend into the transition region overlap with at least a portion of the end plies that extend into the transition region. Preferably, at least a portion of the elongated body plies that extend into the transition region abut at least a portion of the end plies that extend into the transition region.

The at least one computing device may be configured to run a 3-dimensional modeling application program in conjunction with the processing of the design data file to construct the 3-dimensional model.

The unitary composite structure may comprise an elongated hollow body, the closed end geometry and a transition region between the elongated hollow body and the closed end geometry, wherein the elongated hollow body extends longitudinally along an x-axis and a circumference defines a y direction, the processing of the design data file comprising: generating an elongated hollow portion of the 3-dimensional model for the elongated hollow body based on the design data file defining multiple sets of elongated body plies for tow layup of the elongated hollow body; generating a closed end portion of the 3-dimensional model for the closed end geometry based on the design data file defining more than one set of end plies for tow layup of the closed end geometry; and generating a transition portion of the 3-dimensional model for the transition region based on the design data file defining integration of the elongated body plies and the end plies in the transition region. Preferably, the elongated hollow portion of the 3-dimensional model comprises each elongated body ply of each of the multiple sets of elongated body plies and elongated body fiber orientation information for each elongated body ply. Preferably, the closed end portion of the 3-dimensional model comprises each end ply of each of the more than one set of end plies and end fiber orientation information for each end ply. Preferably, the transition portion of the 3-dimensional model comprises each elongated body ply of each of the multiple sets of elongated body plies that extend into the transition region and elongated body fiber orientation information for each of said elongated body plies, and wherein the transition portion of the 3-dimensional model comprises each end ply of each of the more than one set of end plies that extend into the transition region and end fiber orientation information for each of said end plies.

The at least one computing device may be configured to run a modulus analysis application program in conjunction with the analyzing of the 3-dimensional model to identify the modulus characteristics.

The 3-dimensional model of the unitary composite structure may comprise an elongated hollow portion, the closed end portion and a transition portion between the elongated hollow portion and the closed end portion, wherein the elongated hollow portion extends longitudinally along an x-axis and a circumference defines a y direction, the analyzing of the 3-dimensional model comprising: analyzing the elongated hollow portion of the 3-dimensional model based on 3-dimensional representations of each elongated body ply for each of multiple sets of elongated body plies for tow layup of an elongated hollow body, each elongated body ply comprising elongated body fiber orientation information; analyzing the closed end portion of the 3-dimensional model based on 3-dimenational representations of each end ply for each of more than one set of end plies for tow layup of the closed end geometry, each end ply comprising end fiber orientation information; and analyzing the transition portion of the 3-dimensional model based on 3-dimensional representations of each elongated body ply that extends into the transition region and each end ply that extends into the transition region. Preferably, the analyzing of the elongated hollow portion of the 3-dimensional model comprises: dividing the elongated hollow portion into a plurality of lateral elongated body slices; dividing each lateral elongated body slice into a plurality of core samples extending from an elongated body surface through a thickness of the of the elongated hollow portion; and analyzing each core sample of each lateral elongated body slice to determine a collective elongated body fiber orientation for the corresponding core sample and to determine modulus characteristics of the core sample in relation to adjacent core samples. Preferably, the analyzing of the closed end portion of the 3-dimensional model comprises: dividing the closed end portion into a plurality of lateral end slices; dividing each lateral end slice into a plurality of core samples extending from an end surface through a thickness of the of the closed end portion; and analyzing each core sample of each lateral end slice to determine a collective end fiber orientation for the corresponding core sample and to determine modulus characteristics of the core sample in relation to adjacent core samples. Preferably, the analyzing of the transition portion of the 3-dimensional model comprises: dividing the transition portion into a plurality of lateral transition region slices; dividing each lateral transition region slice into a plurality of core samples extending from a transition region surface through a thickness of the of the transition portion; and analyzing each core sample of each lateral transition region slice to determine a collective transition region fiber orientation for the corresponding core sample and to determine modulus characteristics of the core sample in relation to adjacent core samples.

The 3-dimensional model of the unitary composite structure may comprise an elongated hollow portion, a closed end portion and a transition portion between the elongated hollow portion and the closed end portion, wherein the elongated hollow portion extends longitudinally along an x-axis and a circumference defines a y direction, the generating of the modulus results data comprising: generating modulus results data for the elongated hollow portion of the 3-dimensional model based on modulus characteristics from analysis of the tow layup design for the elongated hollow portion; generating modulus results data for the closed end portion of the 3-dimensional model based on modulus characteristics from analysis of the tow layup design for the closed end portion; and generating modulus results data for the transition portion of the 3-dimensional model based on modulus characteristics from analysis of the tow layup design for the transition portion.

Preferably, the generating of the modulus results data for the elongated hollow portion comprises: arranging the modulus results data for the elongated hollow portion into a plurality of lateral elongated body slices and a plurality of core samples following a circumference of the corresponding lateral elongated body slice, the core samples extending from an elongated body surface through a thickness of the elongated hollow portion, and wherein the modulus results data for each core sample comprises a collective elongated body fiber orientation for the corresponding core sample and modulus characteristics of the core sample in relation to adjacent core samples, wherein optionally the generating of the modulus results data for the elongated hollow portion further comprises: generating at least one of a tabular report, a graph and a heat map for at least one lateral elongated body slice of the elongated hollow portion; and generating at least one of a tabular report, a graph and a heat map for the elongated hollow portion.

Preferably, the generating of the modulus results data for the closed end portion comprises: arranging the modulus results data for the closed end portion into a plurality of lateral end slices and a plurality of core samples following a circumference of the corresponding lateral end slice, the core samples extending from an end surface through a thickness of the closed end portion, and wherein the modulus results data for each core sample comprises a collective end fiber orientation for the corresponding core sample and modulus characteristics of the core sample in relation to adjacent core samples, optionally wherein the generating of the modulus results data for the closed end portion further comprises: generating at least one of a tabular report, a graph and a heat map for at least one lateral end slice of the closed end portion; and generating at least one of a tabular report, a graph and a heat map for the closed end portion.

Preferably, the generating of the modulus results data for the transition portion comprises: arranging the modulus results data for the transition portion into a plurality of lateral transition region slices and a plurality of core samples following a circumference of the corresponding lateral transition region slice, the core samples extending from a transition region surface through a thickness of the transition portion, and wherein the modulus results data for each core sample comprises a collective transition region fiber orientation for the corresponding core sample and modulus characteristics of the core sample in relation to adjacent core samples, optionally wherein the generating of the modulus results data for the transition portion further comprises: generating at least one of a tabular report, a graph and a heat map for at least one lateral transition region slice of the transition portion; and generating at least one of a tabular report, a graph and a heat map for the transition portion.

The method may further comprise at least one of: storing the modulus results data on a data storage device accessible to the at least one computing device; printing the modulus results data on a printing device accessible to the at least one computing device; displaying the modulus results data on a display device accessible to the at least one computing device; and sending a message to an operator associated with the at least one computing device providing notice the modulus results data are available and instructions for accessing the modulus results data.

In another example, another disclosed method, such as a computer-implemented method, for analyzing a tow layup design of a unitary composite structure with a closed end geometry includes: (1) selecting a design data file for the tow layup design of the unitary composite structure with the closed end geometry from a design data file repository; (2) constructing a 3-dimensional model of the unitary composite structure; (3) analyzing the 3-dimensional model on at least one computing device to assess modulus characteristics of the tow layup design; and (4) generating modulus results data reflecting the modulus characteristics of the tow layup design for the unitary composite structure at the at least one computing device based on the analyzing of the 3-dimensional model.

The method may further comprise determining a first measure of goodness for the modulus results data based on the design data file; repeating the selecting, the constructing, the analyzing and the generating for a second tow layup design of the unitary composite structure and a second design data file to generate second modulus results data based on the second design data file; determining a second measure of goodness for the second modulus results data based on the second design data file; comparing the second measure of goodness to the first measure of goodness; and selecting an optimized tow layup design for the unitary composite structure from the tow layup design and the second tow layup design based on the comparing.

The unitary composite structure may comprise an elongated hollow body, the closed end geometry and a transition region between the elongated hollow body and the closed end geometry, wherein the elongated hollow body extends longitudinally along an x-axis and a circumference defines a y direction, the design data file comprising: a first design data section defining multiple sets of elongated body plies for tow layup of the elongated hollow body; a second design data section defining more than one set of end plies for tow layup of the closed end geometry; and a third design data section defining integration of the elongated body plies and the end plies in the transition region.

The constructing of the 3-dimensional model comprises: running a 3-dimensional modeling application program on the design data file using the at least one computing device in conjunction with the constructing of the 3-dimensional model. Preferably, the unitary composite structure comprises an elongated hollow body, the closed end geometry and a transition region between the elongated hollow body and the closed end geometry, wherein the elongated hollow body extends longitudinally along an x-axis and a circumference defines a y direction, the constructing of the 3-dimensional model further comprising: generating an elongated hollow portion of the 3-dimensional model for the elongated hollow body based on the design data file defining multiple sets of elongated body plies for tow layup of the elongated hollow body; generating a closed end portion of the 3-dimensional model for the closed end geometry based on the design data file defining more than one set of end plies for tow layup of the closed end geometry; and generating a transition portion of the 3-dimensional model for the transition region based on the design data file defining integration of the elongated body plies and the end plies in the transition region.

The at least one computing device may be configured to run a modulus analysis application program in conjunction with the analyzing of the 3-dimensional model to identify the modulus characteristics.

The 3-dimensional model of the unitary composite structure may comprise an elongated hollow portion, a closed end portion and a transition portion between the elongated hollow portion and the closed end portion, wherein the elongated hollow portion extends longitudinally along an x-axis and a circumference defines a y direction, the analyzing of the 3-dimensional model comprising: analyzing the elongated hollow portion of the 3-dimensional model based on 3-dimensional representations of each elongated body ply for each of multiple sets of elongated body plies for tow layup of an elongated hollow body, each elongated body ply comprising elongated body fiber orientation information; analyzing the closed end portion of the 3-dimensional model based on 3-dimenational representations of each end ply for each of more than one set of end plies for tow layup of the closed end geometry, each end ply comprising end fiber orientation information; and analyzing the transition portion of the 3-dimensional model based on 3-dimensional representations of each elongated body ply that extends into a transition region and each end ply that extends into the transition region.

The 3-dimensional model of the unitary composite structure may comprise an elongated hollow portion, a closed end portion and a transition portion between the elongated hollow portion and the closed end portion, wherein the elongated hollow portion extends longitudinally along an x-axis and a circumference defines a y direction, the generating of the modulus results data comprising: generating modulus results data for the elongated hollow portion of the 3-dimensional model based on modulus characteristics from analysis of the tow layup design for the elongated hollow portion; generating modulus results data for the closed end portion of the 3-dimensional model based on modulus characteristics from analysis of the tow layup design for the closed end portion; and generating modulus results data for the transition portion of the 3-dimensional model based on modulus characteristics from analysis of the tow layup design for the transition portion.

The method may further comprise at least one of: storing the modulus results data on a data storage device accessible to the at least one computing device; printing the modulus results data on a printing device accessible to the at least one computing device; displaying the modulus results data on a display device accessible to the at least one computing device; and sending a message to an operator associated with the at least one computing device providing notice the modulus results data are available and instructions for accessing the modulus results data.

In yet another example, yet another disclosed method, such as a computer-implemented method, for analyzing a tow layup design of a unitary composite structure with a closed end geometry includes: (1) selecting a design data file for the tow layup design of the unitary composite structure with the closed end geometry from a design data file repository; (2) processing the design data file on at least one computing device to construct a 3-dimensional model of the unitary composite structure; (3) analyzing the 3-dimensional model at the at least one computing device to assess modulus characteristics of the tow layup design; (4) generating modulus results data reflecting the modulus characteristics of the tow layup design for the unitary composite structure at the at least one computing device based on the analyzing of the 3-dimensional model; and (5) performing at least one of (i) storing the modulus results data on a data storage device accessible to the at least one computing device, (ii) printing the modulus results data on a printing device accessible to the at least one computing device, (iii) displaying the modulus results data on a display device accessible to the at least one computing device and (iv) sending a message to an operator associated with the at least one computing device providing notice the modulus results data are available and instructions for accessing the modulus results data.

The method may further comprise: determining a first measure of goodness for the modulus results data based on the design data file; repeating the selecting, the processing, the analyzing and the generating for a second tow layup design of the unitary composite structure and a second design data file to generate second modulus results data based on the second design data file; determining a second measure of goodness for the second modulus results data based on the second design data file; comparing the second measure of goodness to the first measure of goodness; and selecting an optimized tow layup design for the unitary composite structure from the tow layup design and the second tow layup design based on the comparing.

The at least one computing device may be configured to run a 3-dimensional modeling application program in conjunction with the processing of the design data file to construct the 3-dimensional model.

The at least one computing device may be configured to run a modulus analysis application program in conjunction with the analyzing of the 3-dimensional model to identify the modulus characteristics.

A first set of end plies in the design data file may comprise: a first end ply with first physical characteristics; a second end ply with second physical characteristics different from the first physical characteristics; a third end ply with third physical characteristics different from the second physical characteristics; and a fourth end ply with fourth physical characteristics different from the third physical characteristics.

Preferably, a fiber angle for the first end ply through the fourth end ply comprises an average of 45 degrees.

Preferably, the first set of end plies further comprises: a fifth end ply with fifth physical characteristics different from the fourth physical characteristics. Optionally, a fiber angle for the first end ply through the fifth end ply comprises an average of 36 degrees. Optionally, the first set of end plies further comprises: a sixth end ply with sixth physical characteristics different from the fifth physical characteristics. Further preferably, a fiber angle for the first end ply through the sixth end ply comprises an average of 30 degrees. Further preferably, the first set of end plies further comprises: a seventh end ply with seventh physical characteristics different from the sixth physical characteristics; and an eighth end ply with eighth physical characteristics different from the seventh physical characteristics, optionally wherein: a fiber angle for the first end ply through the eighth end ply comprises an average of 22.5 degrees.

Other examples of the disclosed methods for analyzing tow layup designs of unitary composite structures with closed end geometries will become apparent from the following detailed description, the accompanying drawings and the appended claims.

### BRIEF DESCRIPTION OF THE DRAWINGS

Fig. 1 is a flow diagram of an example of a method for analyzing a tow layup design of a unitary composite structure with a closed end geometry;
Fig. 2 is a functional block diagram of an example of a tow layup design;
Fig. 3 is a perspective view of an example of a unitary composite structure;
Fig. 4 is a functional block diagram of an example of a system for analyzing a tow layup design of a unitary composite structure with a closed end geometry;
Fig. 5 is a functional block diagram of an example of a design data file for a unitary composite structure;
Fig. 6 is a flow diagram of an example of the processing of the design data file in the method of Fig. 1;
Fig. 7 is a side view of an example of a 3-dimensional model of a unitary composite structure with a closed end geometry;
Fig. 8 is a flow diagram of an example of the analyzing of the 3-dimensional model in the method of Fig. 1;
Fig. 9 is a flow diagram of an example of the analyzing of the elongated hollow portion of Fig. 8;
Fig. 10 is a flow diagram of an example of the analyzing of the closed end portion of Fig. 8;
Fig. 11 is a flow diagram of an example of the analyzing of the transition portion of Fig. 8;
Fig. 12 is a flow diagram of an example of the generating of the modulus results data in the method of Fig. 1;
Fig. 13 is a flow diagram of an example of the generating of the modulus results data for the elongated hollow portion of Fig. 12;
Fig. 14 is a flow diagram of an example of the generating of the modulus results data for the closed end portion of Fig. 12;
Fig. 15 is a flow diagram of an example of the generating of the modulus results data for the transition portion of Fig. 12;
Fig. 16, in combination with Fig. 1, is a flow diagram of another example of a method for analyzing a tow layup design of a unitary composite structure with a closed end geometry;
Fig. 17 is a flow diagram of yet another example of a method for analyzing a tow layup design of a unitary composite structure with a closed end geometry;
Fig. 18 is a flow diagram of an example of the constructing of the 3-dimensional model in the method of Fig. 17;
Fig. 19 is a flow diagram of an example of the analyzing of the 3-dimensional model in the method of Fig. 17;
Fig. 20 is a flow diagram of an example of the generating of the modulus results data in the method of Fig. 17;
Fig. 21, in combination with Fig. 17, is a flow diagram of still another example of a method for analyzing a tow layup design of a unitary composite structure with a closed end geometry;
Fig. 22 is a flow diagram of still yet another example of a method for analyzing a tow layup design of a unitary composite structure with a closed end geometry;
Fig. 23, in combination with Fig. 1, is a flow diagram of still yet another example of a method for analyzing a tow layup design of a unitary composite structure with a closed end geometry;
Fig. 24, in combination with Fig. 17, is a flow diagram of another example of a method for analyzing a tow layup design of a unitary composite structure with a closed end geometry;
Fig. 25, in combination with Fig. 22, is a flow diagram of yet another example of a method for analyzing a tow layup design of a unitary composite structure with a closed end geometry;
Figs. 26A-B are perspective and end views of an example of a 3-dimensional model of a unitary composite structure with a closed end geometry;
Fig. 27 is a perspective view of another example of a 3-dimensional model of a unitary composite structure with a closed end geometry;
Fig. 28 is a perspective view of yet another example of a 3-dimensional model that shows examples of lateral end slices, lateral transition region slices and lateral elongated body slices of the 3-dimensional model;
Fig. 29 is an example of a heat map for the closed end portion and the transition portion of the 3-dimensional model;
Fig. 30A is an example of a graph for a lateral end slice of the 3-dimensional model;
Fig. 30B is an example of a heat map for a lateral end slice of Fig. 30A;
Fig. 31A is an example of a heat map for a transition portion of the 3-dimensional model;
Fig. 31B is an example of a graph for a lateral transition region slice of the 3-dimensional model;
Fig. 31C provides several examples of graphs for a transition portion of the 3-dimensional model;
Fig. 32 is a perspective view of another example of a 3-dimensional model of a unitary composite structure with a closed end geometry;
Fig. 33 is a perspective view of yet another example of a 3-dimensional model of a unitary composite structure with a closed end geometry;
Fig. 34 is a perspective view of still another example of a 3-dimensional model of a unitary composite structure with a closed end geometry;
Fig. 35 is a block diagram of aircraft production and service methodology that implements one or more of the examples of methods for analyzing tow layup designs of unitary composite structures with closed end geometries disclosed herein; and
Fig. 36 is a schematic illustration of an aircraft that incorporates a component that was designed and constructed based on one or more of the examples of methods for analyzing tow layup designs of unitary composite structures with closed end geometries disclosed herein.

### DETAILED DESCRIPTION

The various examples of methods 100, 1600, 1700, 2100, 2200, 2300, 2400, 2500 for analyzing a tow layup design 200 of a unitary composite structure 300 with a closed end geometry 302 disclosed herein enable the use of an optimized approach for fiber distribution and alignment. A goal of this approach is to get modulus within accepted range for quasi-isotropic laminate properties. Another goal is to reduce variability of modulus across the region. The approach also enables lower variability and higher desirable moduli for the integration of composite components. The optimization of moduli can enable weight reduction and design optimization methodologies that save cost and increase value of the product (e.g., higher payload).

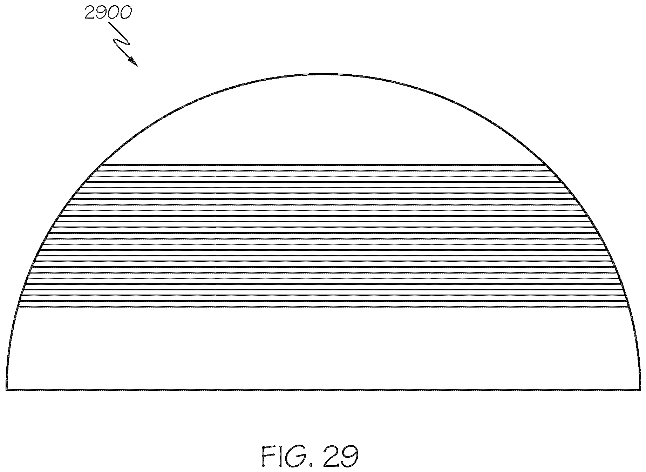

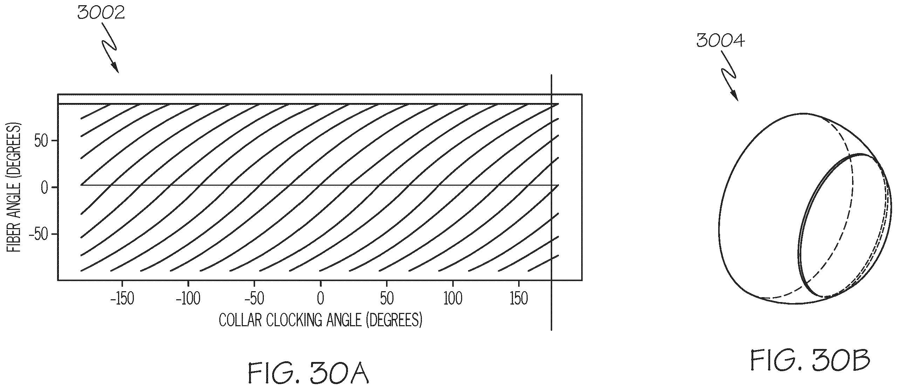

The variability in modulus of Ex and Ey due to dome fiber contributions can be undesirable, for example, for a pressure vessel. Given that these composite structures are very thick, there is a large majority of dome fiber variability contribution that occurs and therefore needs to be addressed. To mitigate, the contributions from dome fibers can be precisely located so that there is more desirable Ex modulus and less variability circumferentially throughout. In order to understand moduli variability and amplitude, analysis tools are used to sample areas (e.g., Collars) of the laminate (see, e.g., Figs. 29, 30A-B and 31A-C). These collars are analyzed for fiber angle relative to their respective location and corroborated with the modulus analysis heat map (see, e.g., Figs. 29, 30B and 31A). Iterations of specific dome plies and the available intersection locations with respect to the resultant moduli demonstrate how to go from high variability with low Ex (standard layup, no optimization) to low variability and desirable Ex.

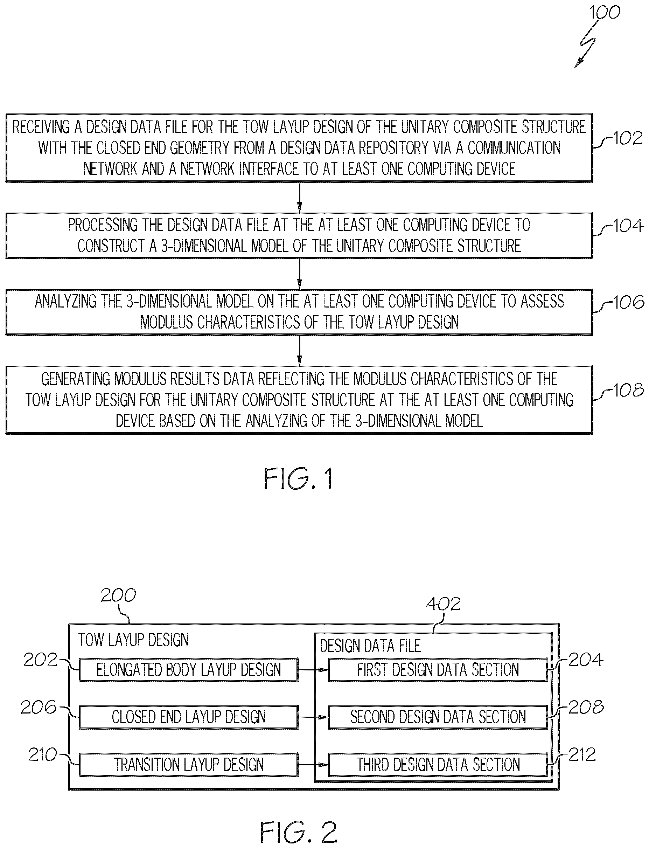

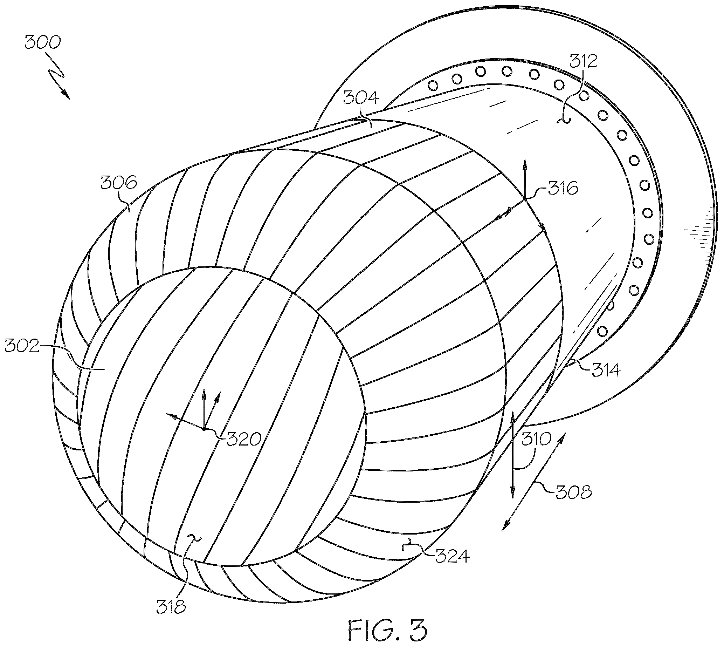

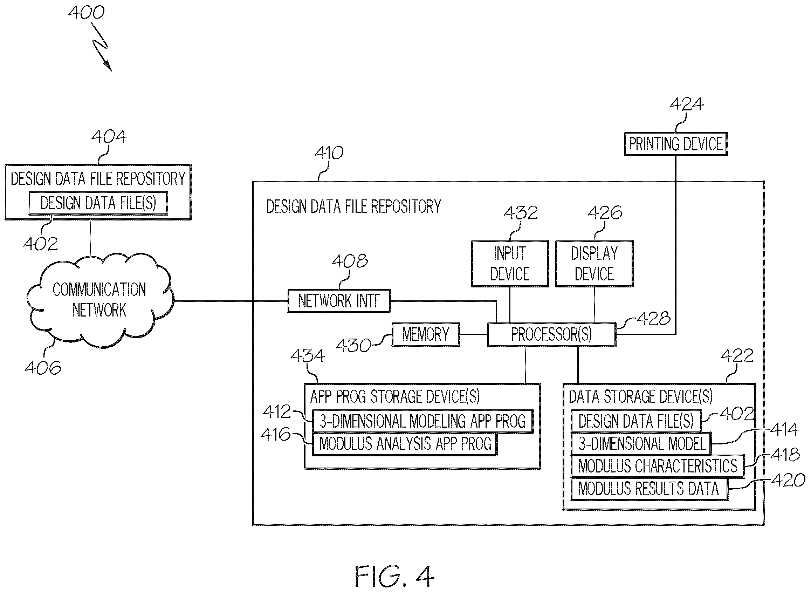

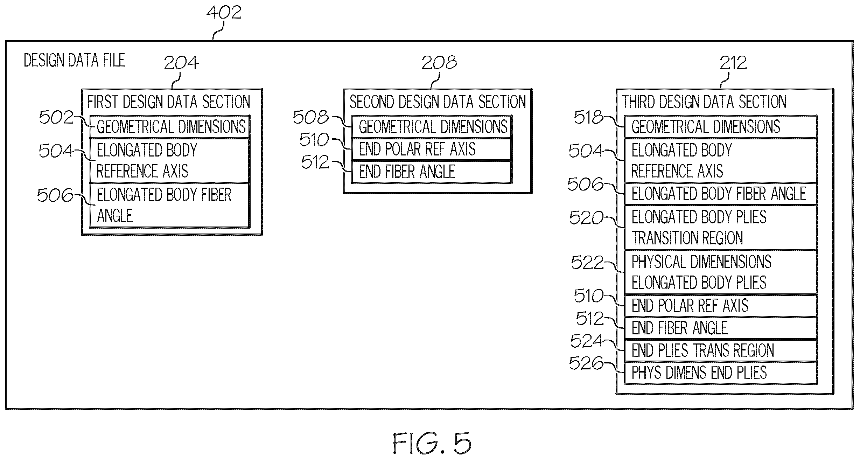

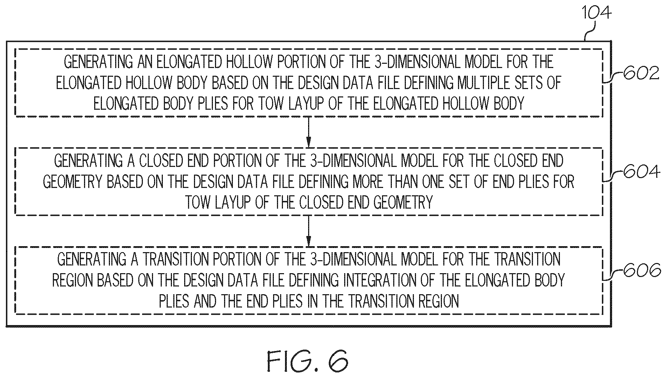

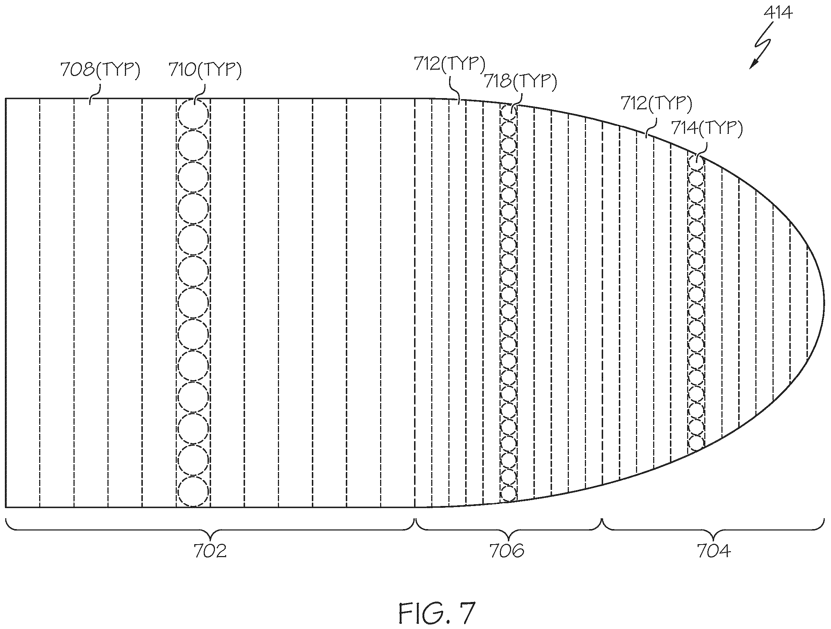

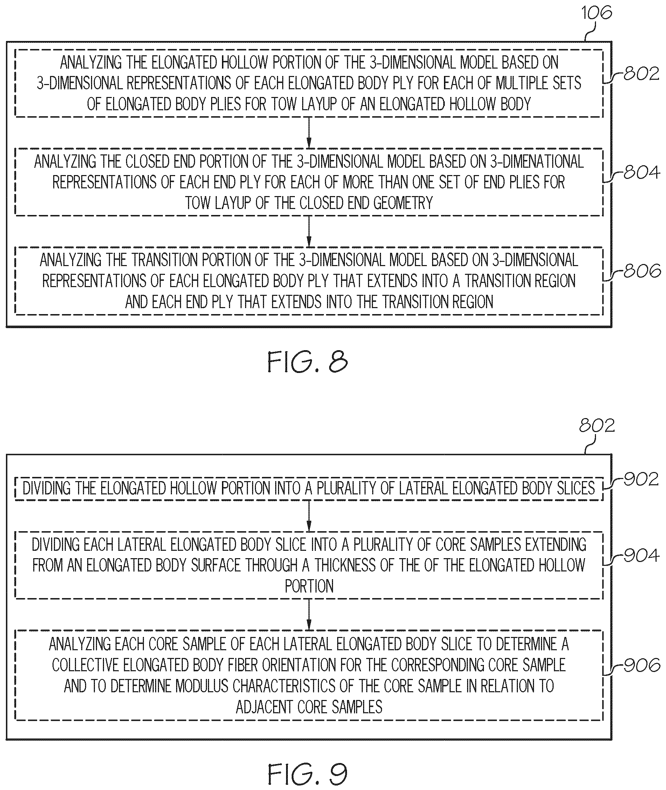

Referring generally to Figs. 1-16, 23, 29, 31A-C and 32-34, by way of examples, the present disclosure is directed to a method 100, 1600, 2300 for analyzing a tow layup design 200 of a unitary composite structure 300 with a closed end geometry 302. Fig. 1 provides an example of the method 100 for analyzing a tow layup design 200 of a unitary composite structure 300 with a closed end geometry 302. Fig. 2 shows an example of the tow layup design 200. Fig. 3 shows an example of the unitary composite structure 300. Fig. 4 shows an example of a system for analyzing the tow layup design 200 of the unitary composite structure 300 with the closed end geometry 302. Fig. 5 shows an example of a design data file 402 for the unitary composite structure 300. Fig. 6 is an example of the processing 104 of the design data file 402 in the method 100 of Fig. 1. Fig. 7 shows an example of a 3-dimensional model 414, 3200, 3300, 3400 of the unitary composite structure 300 with the closed end geometry 302. Fig. 8 is an example of the analyzing 106 of the 3-dimensional model 414, 3200, 3300, 3400 in the method 100 of Fig. 1.

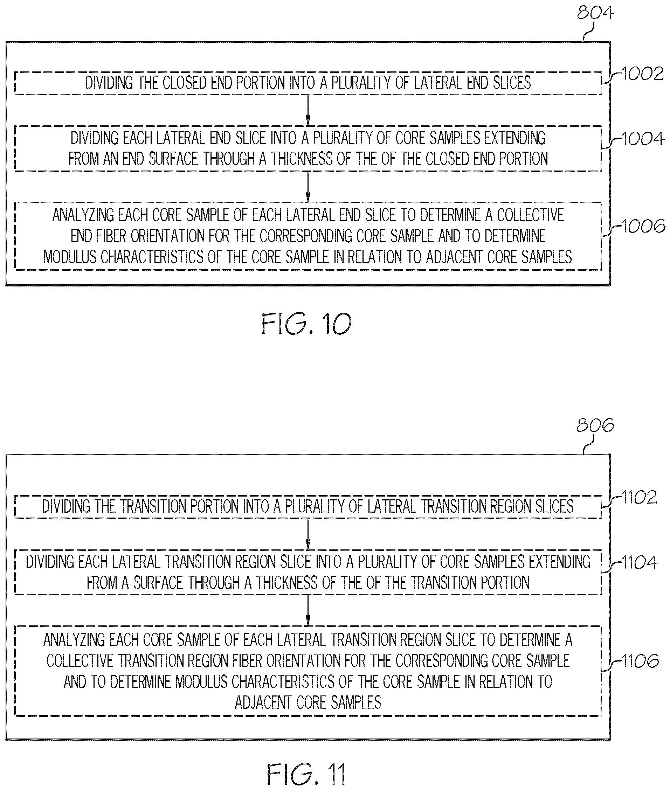

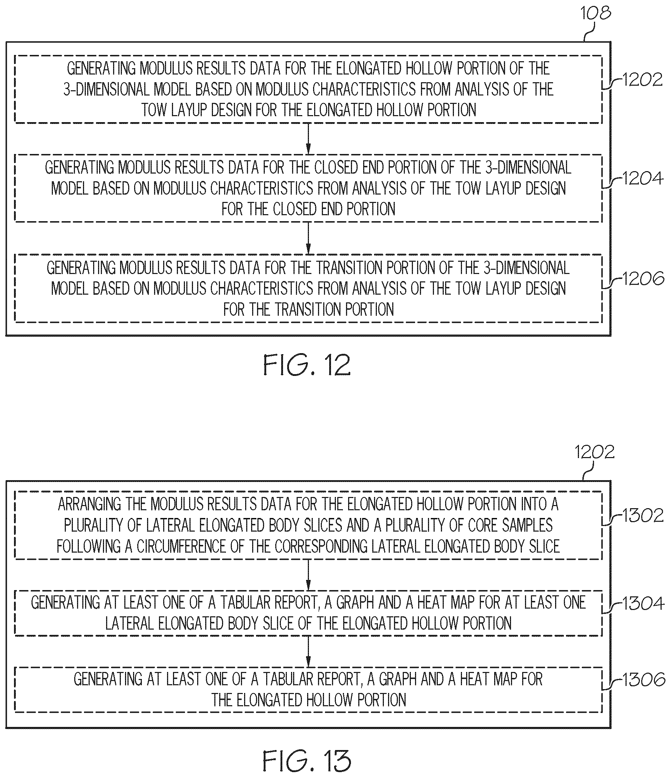

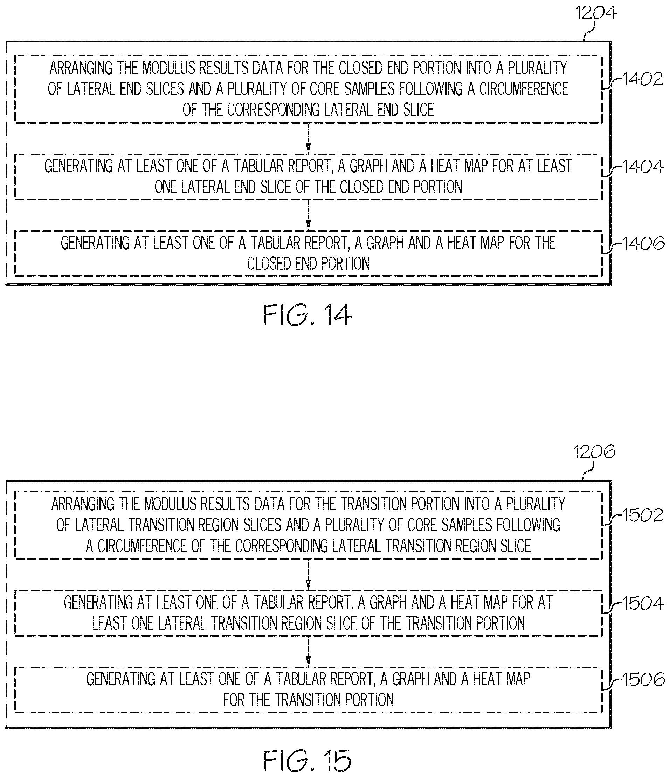

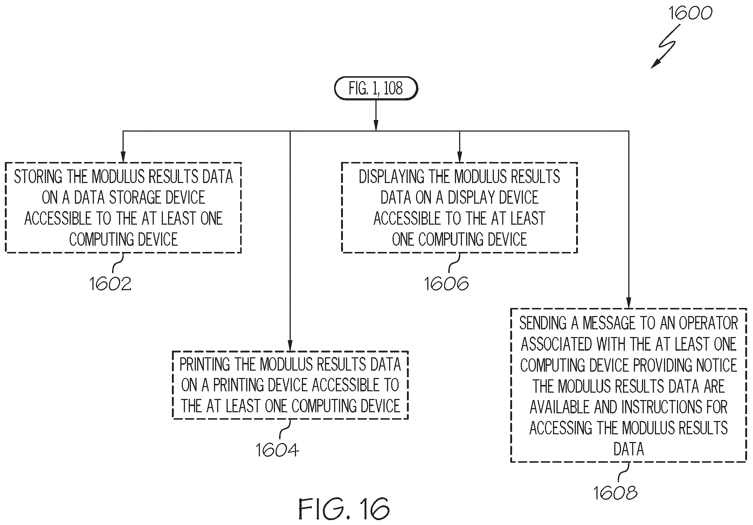

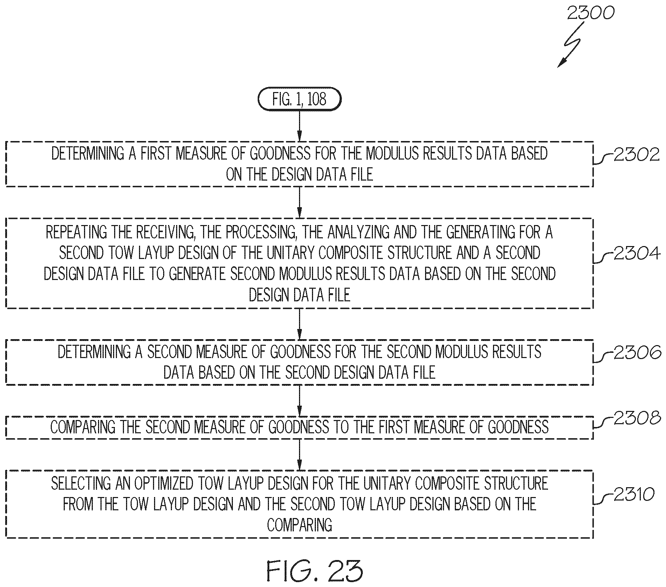

Fig. 9 is an example of the analyzing 802 of the elongated hollow portion 702 of Fig. 8. Fig. 10 is an example of the analyzing 804 of the closed end portion 704 of Fig. 8. Fig. 11 is an example of the analyzing 806 of the transition portion 706 of Fig. 8. Fig. 12 is an example of the generating 108 of the modulus results data 420 in the method 100 of Fig. 1. Fig. 13 is an example of the generating 1202 of the modulus results data 420 for the elongated hollow portion 702 of Fig. 12. Fig. 14 is an example of the generating 1204 of the modulus results data 420 for the closed end portion 704of Fig. 12. Fig. 15 is an example of the generating 1206 of the modulus results data 420 for the transition portion 706 of Fig. 12. Fig. 16, in combination with Fig. 1, provides an example of the method 1600 for analyzing a tow layup design 200 of a unitary composite structure 300 with a closed end geometry 302. Fig. 23, in combination with Fig. 1, provides an example of the method 2300 for analyzing a tow layup design 200 of a unitary composite structure 300 with a closed end geometry 302.

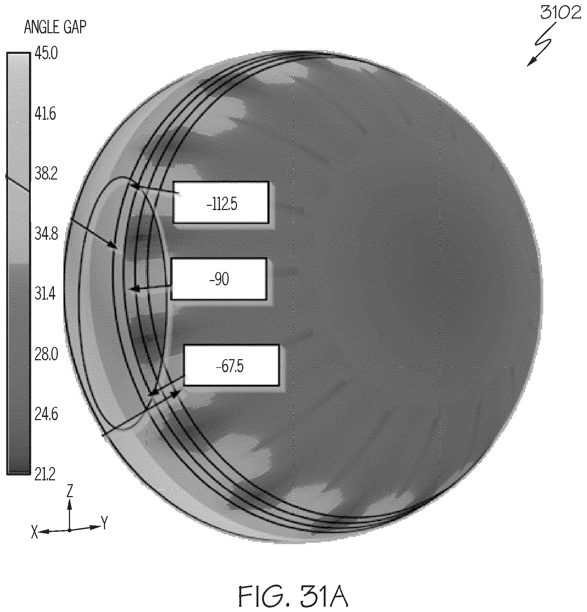

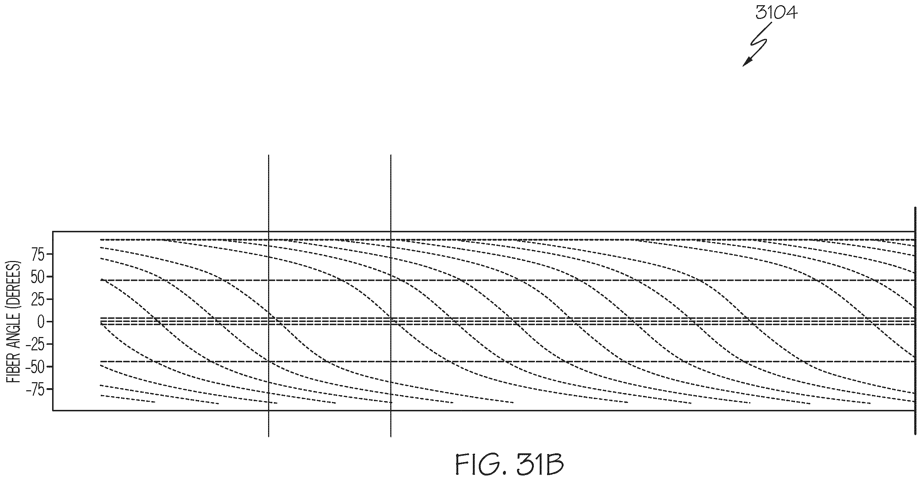

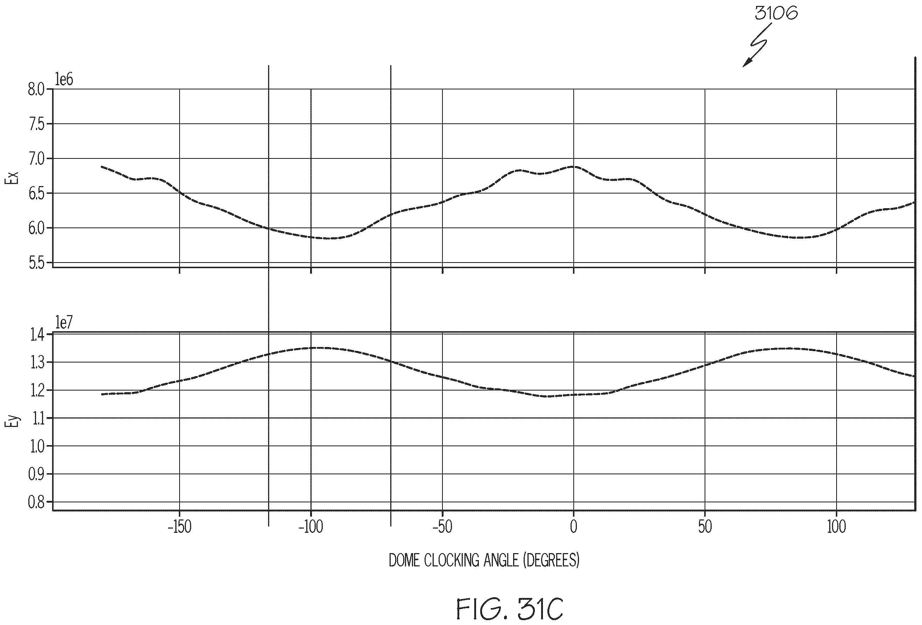

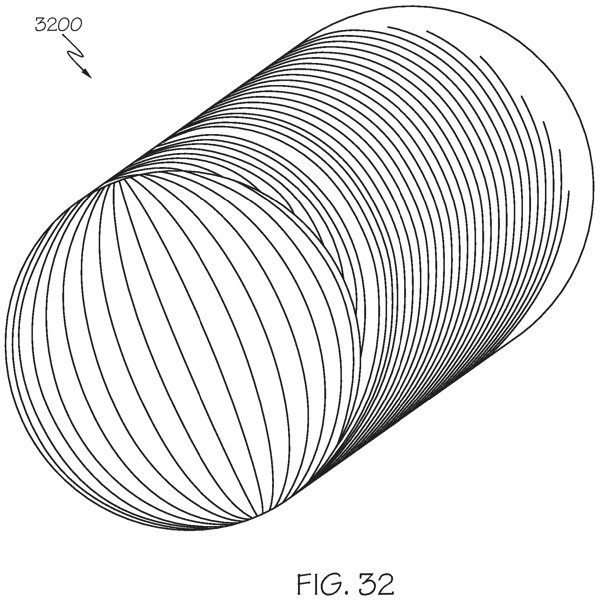

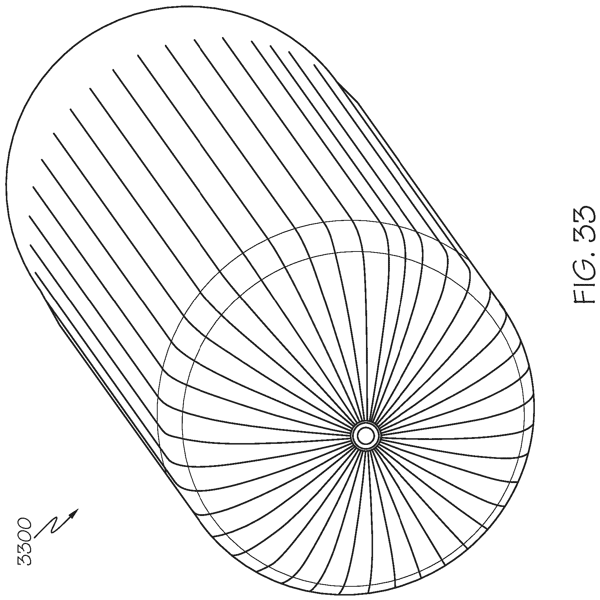

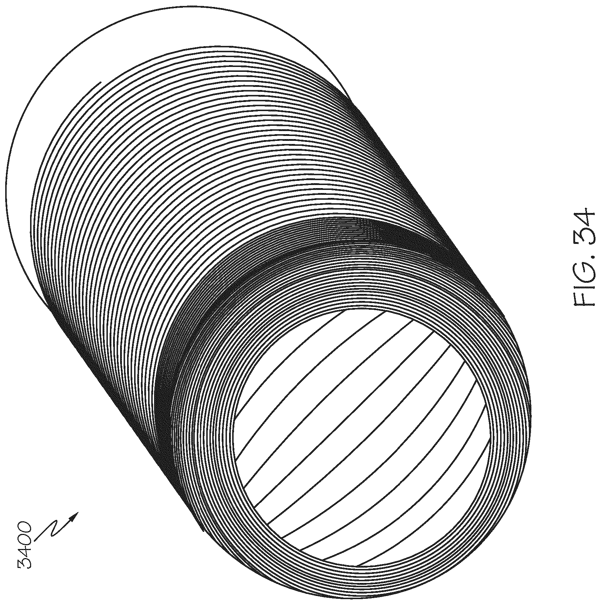

Fig. 29 shows an example of a heat map 2900 for the closed end portion 704 and the transition portion 706 of the 3-dimensional model 414, 3200, 3300, 3400. Fig. 31A shows an example of a heat map 3102 for a transition portion 706 of the 3-dimensional model 414, 3200, 3300, 3400. Fig. 31B shows an example of a graph 3104 for a lateral transition region slice 716 of the 3-dimensional model 414, 3200, 3300, 3400. Fig. 31C shows several examples of graphs 3106 for a transition portion 706 of the 3-dimensional model 414, 3200, 3300, 3400. Fig. 32 shows another example of a 3-dimensional model 3200 of a unitary composite structure 300 with a closed end geometry 302. Fig. 33 shows yet another example of a 3-dimensional model 3300 of a unitary composite structure 300 with a closed end geometry 302. Fig. 34 shows still another example of a 3-dimensional model 3400 of a unitary composite structure 300 with a closed end geometry 302.

With reference again to Figs. 1-4 and 32-34, in one or more examples, a method 100 (see Fig. 1) for analyzing a tow layup design 200 of a unitary composite structure 300 with a closed end geometry 302 includes receiving 102 a design data file 402 for the tow layup design 200 of the unitary composite structure 300 with the closed end geometry 302 from a design data file repository 404 via a communication network 406 and a network interface 408 to at least one computing device 410. At 104, the design data file 402 is processed at the at least one computing device 410 to construct a 3-dimensional model 414, 3200, 3300, 3400 of the unitary composite structure 300. At 106, the 3-dimensional model 414, 3200, 3300, 3400 is analyzed at the at least one computing device 410 to assess modulus characteristics 418 of the tow layup design 200. At 108, modulus results data 420 reflecting the modulus characteristics 418 of the tow layup design 200 for the unitary composite structure 300 is generated at the at least one computing device 410 based on the analyzing 106 of the 3-dimensional model 414, 3200, 3300, 3400.

With reference again to Figs. 1-4, 23 and 32-34, in one or more examples, a method 2300 (see Fig. 23) for analyzing a tow layup design 200 of a unitary composite structure 300 with a closed end geometry 302 includes the method 100 of Fig. 1 and continues from 108 to 2302 where a first measure of goodness is determined for the modulus results data 420 based on the design data file 402. At 2304, the receiving 102, the processing 104, the analyzing 106 and the generating 108 is repeated for a second tow layup design of the unitary composite structure 300 and a second design data file to generate second modulus results data based on the second design data file. At 2306, a second measure of goodness is determined for the second modulus results data based on the second design data file. At 2308, the second measure of goodness is compared to the first measure of goodness. At 2310, an optimized tow layup design for the unitary composite structure 300 is selected from the tow layup design 200 and the second tow layup design based on the comparing 2308. In another example of the method 2300, the first measure of goodness and the second measure of goodness include an isotropic measure over the 3-dimensional model 414, 3200, 3300, 3400 or a portion thereof, a variance measure of laminate properties over the 3-dimensional model 414, 3200, 3300, 3400 or a portion thereof, a modulus measure of a select characteristic over the 3-dimensional model 414, 3200, 3300, 3400 or a portion thereof or any other suitable measure of goodness in any suitable combination.

With reference again to Figs. 1-15, 29, 31A-C and 32-34, in another example of the method 100, the unitary composite structure 300 includes an elongated hollow body 304, the closed end geometry 302 and a transition region 306 between the elongated hollow body 304 and the closed end geometry 302. In a further example, the tow layup design 200 includes an elongated body layup design 202, a closed end layup design 206 and a transition layup design 210. The elongated body layup design 202 includes a first design data section 204 within the design data file 402 defining multiple sets of elongated body plies for tow layup of the elongated hollow body 304. The closed end layup design 206 includes a second design data section 208 within the design data file 402 defining more than one set of end plies for tow layup of the closed end geometry 302. The transition layup design 210 includes a third design data section 212 within the design data file 402 defining integration of the elongated body plies and the end plies.

In yet another example of the method 100, the closed end geometry 302 includes a dome, a hemispherical dome, an elliptical dome, a semi-elliptical head, a torispherical head, a dished head or any other suitable closed end geometry in any suitable combination. In still another example of the method 100, the elongated hollow body 304 includes a cylinder, a pipe, a tube, a cylindrical body, an ellipsoidal body, a contoured body or any other suitable elongated hollow body in any suitable combination.

In still yet another example of the method 100, the unitary composite structure 300 includes an elongated hollow body 304, the closed end geometry 302 and a transition region 306 between the elongated hollow body 304 and the closed end geometry 302. In this example, the elongated hollow body 304 extends longitudinally along an x-axis 308 and a circumference defines a y direction 310. The design data file 402 includes a first design data section 204, a second design data section 208 and a third design data section 212. The first design data section 204 defines multiple sets of elongated body plies for tow layup of the elongated hollow body 304. The second design data section 208 defines more than one set of end plies for tow layup of the closed end geometry 302. The third design data section 212 defines integration of the elongated body plies and the end plies in the transition region 306.

In a further example, the first design data section 204 includes a set of geometrical dimensions 502, a location of an elongated body reference axis 504 and an elongated body fiber angle 506. The a set of geometrical dimensions 502 is for an elongated body surface 312 of a mandrel 314 used for tow layup of the elongated body plies. The elongated body surface 312 associated with the elongated hollow body 304 of the unitary composite structure 300. The location of an elongated body reference axis 504 is on the elongated body surface 312 to define a zero-degree fiber angle 316 for the elongated body plies. The elongated body fiber angle 506 for each set of elongated body plies in relation to the elongated body reference axis 504. In an even further example, the elongated body fiber angle 506 for each set of elongated body plies is based on a relative distribution of elongated body plies at 0 degrees, 45 degrees, -45 degrees or any other suitable angle or angular range.

In another further example, the second design data section 208 includes a set of geometrical dimensions 508, a location of an end polar reference axis 510 and an end fiber angle 512. The set of geometrical dimensions 508 for an end surface 318 of a mandrel 314 used for tow layup of the end plies. The end surface 318 is associated with the closed end geometry 302 of the unitary composite structure 300. The location of an end polar reference axis 510 is on the end surface 318 to define a zero-degree fiber angle 320 for the end plies. The end fiber angle 512 for each set of end plies is in relation to the end polar reference axis 510. In an even further example, the end fiber angle 512 for each set of end plies is based on 180 degrees, relative to the reference axis, divided by a quantity of end plies within the corresponding set of end plies. In an even yet further example, the quantity of end plies within the corresponding set of end plies includes two end plies, three end plies, four end plies, five end plies, six end plies, eight end plies, nine end plies, ten end plies or any other suitable quantity of end plies. In another even yet further example, the end fiber angle 512 for the corresponding set of end plies includes a range of 90 degrees to 60 degrees, 60 degrees to 45 degrees, 45 degrees to 36 degrees, 36 degrees to 30 degrees, 30 degrees to 22.5 degrees, 22.5 degrees to 20 degrees, 20 degrees to 18 degrees, less than 18 degrees or any other suitable angular range.

In yet another further example, the third design data section 212 includes a set of geometrical dimensions 518, an elongated body fiber angle 506, identification of elongated body plies 520, physical dimensions 522 for portions of the elongated body plies, a location of an end polar reference axis 510, an end fiber angle 512, identification of end plies 524 and physical dimensions 526 for portions of end plies. The set of geometrical dimensions 518 are for a transition region surface 324 of a mandrel 314 used for integrated tow layup of the elongated body plies and the end plies. The transition region surface 324 is associated with the transition region 306 of the unitary composite structure 300. The location of the elongated body reference axis 504 is on an elongated body surface 312 to define a zero-degree fiber angle 316 for the elongated body plies. The elongated body fiber angle 506 is for each set of elongated body plies in relation to the elongated body reference axis 504. The identification of elongated body plies 520 is for elongated body plies 520 within each set of elongated body plies that extend into the transition region 306. The physical dimensions 522 are for portions of the elongated body plies within each set of elongated body plies that extend into the transition region 306. The location of an end polar reference axis 510 is on an end surface 318 to define a zero-degree fiber angle 320 for the end plies. The end fiber angle 512 is for each set of end plies in relation to the end polar reference axis 510. The identification of end plies 524 is for end plies within each set of end plies that extend into the transition region 306. The physical dimensions 526 are for portions of end plies that within each set of end plies that extend into the transition region 306.

In an even further example, the elongated body plies that extend into the transition region 306 and the end plies that extend into the transition region 306 form a joint within the transition region 306. In an even yet further example, the joint within the transition region 306 includes a scarf joint, a double scarf joint, an overlap joint, a butt joint, a series of joints, a series of joints at a common longitudinal location, a series of joints at staggered longitudinal locations or any other suitable type of joint in any suitable combination. In another even further example, at least a portion of the elongated body plies that extend into the transition region 306 overlap with at least a portion of the end plies that extend into the transition region 306. In yet another even further example, at least a portion of the elongated body plies that extend into the transition region 306 abut at least a portion of the end plies that extend into the transition region 306.

In another example of the method 100, the at least one computing device 410 is configured to run a 3-dimensional modeling application program 412 in conjunction with the processing 104 of the design data file 402 to construct the 3-dimensional model 414, 3200, 3300, 3400.

In yet another example of the method 100, the unitary composite structure 300 includes an elongated hollow body 304, the closed end geometry 302 and a transition region 306 between the elongated hollow body 304 and the closed end geometry 302. The elongated hollow body 304 extends longitudinally along an x-axis 308 and a circumference defines a y direction 310. In this example, the processing 104 of the design data file 402 includes generating 602 (see Fig. 6) an elongated hollow portion 702 of the 3-dimensional model 414, 3200, 3300, 3400 for the elongated hollow body 304 based on the design data file 402 defining multiple sets of elongated body plies for tow layup of the elongated hollow body 304. At 604, a closed end portion 704 of the 3-dimensional model 414, 3200, 3300, 3400 is generated for the closed end geometry 302 based on the design data file 402 defining more than one set of end plies for tow layup of the closed end geometry 302. At 606, a transition portion 706 of the 3-dimensional model 414, 3200, 3300, 3400 is generated for the transition region 306 based on the design data file 402 defining integration of the elongated body plies and the end plies in the transition region 306.

In a further example, the elongated hollow portion 702 of the 3-dimensional model 414, 3200, 3300, 3400 includes each elongated body ply of each of the multiple sets of elongated body plies and elongated body fiber orientation information for each elongated body ply. In another further example, the closed end portion 704 of the 3-dimensional model 414, 3200, 3300, 3400 includes each end ply of each of the more than one set of end plies and end fiber orientation information for each end ply. In yet another further example, the transition portion 706 of the 3-dimensional model 414, 3200, 3300, 3400 includes each elongated body ply of each of the multiple sets of elongated body plies that extend into the transition region 306 and elongated body fiber orientation information for each of said elongated body plies. The transition portion 706 of the 3-dimensional model 414, 3200, 3300, 3400 includes each end ply of each of the more than one set of end plies that extend into the transition region 306 and end fiber orientation information for each of said end plies.

In still another example of the method 100, the at least one computing device 410 is configured to run a modulus analysis application program 416 in conjunction with the analyzing 106 of the 3-dimensional model 414, 3200, 3300, 3400 to identify the modulus characteristics 418.

In still yet another example of the method 100, the 3-dimensional model 414, 3200, 3300, 3400 of the unitary composite structure 300 includes an elongated hollow portion 702, a closed end portion 704 and a transition portion 706 between the elongated hollow portion 702 and the closed end portion 704. The elongated hollow portion 702 extends longitudinally along an x-axis 308 and a circumference defines a y direction 310. In this example, the analyzing 106 of the 3-dimensional model 414, 3200, 3300, 3400 includes analyzing 802 (see Fig. 8) the elongated hollow portion 702 of the 3-dimensional model 414, 3200, 3300, 3400 based on 3-dimensional representations of each elongated body ply for each of multiple sets of elongated body plies for tow layup of an elongated hollow body 304. Each elongated body ply includes elongated body fiber orientation information. At 804, the closed end portion 704 of the 3-dimensional model 414, 3200, 3300, 3400 is analyzed based on 3-dimenational representations of each end ply for each of more than one set of end plies for tow layup of the closed end geometry 302. Each end ply includes end fiber orientation information. At 806, the transition portion 706 of the 3-dimensional model 414, 3200, 3300, 3400 is analyzed based on 3-dimensional representations of each elongated body ply that extends into a transition region 306 and each end ply that extends into the transition region 306.

In a further example, the analyzing 802 of the elongated hollow portion 702 of the 3-dimensional model 414, 3200, 3300, 3400 includes dividing 902 (see Fig. 9) the elongated hollow portion 702 into a plurality of lateral elongated body slices 708. At 904, each lateral elongated body slice 708 is divided into a plurality of core samples 710 extending from an elongated body surface 312 through a thickness of the of the elongated hollow portion 702. At 906, each core sample 710 of each lateral elongated body slice 708 is analyzed to determine a collective elongated body fiber orientation for the corresponding core sample 710 and to determine modulus characteristics 418 of the core sample 710 in relation to adjacent core samples 710. In another further example, the analyzing 804 of the closed end portion 704 of the 3-dimensional model 414, 3200, 3300, 3400 includes dividing 1002 (see Fig. 10) the closed end portion 704 into a plurality of lateral end slices 712. At 1004, each lateral end slice 712 is divided into a plurality of core samples 714 extending from an end surface 318 through a thickness of the of the closed end portion 704. At 1006, each core sample 714 of each lateral end slice 712 is analyzed to determine a collective end fiber orientation for the corresponding core sample 714 and to determine modulus characteristics 418 of the core sample 714 in relation to adjacent core samples 714. In yet another further example, the analyzing 806 of the transition portion 706 of the 3-dimensional model 414, 3200, 3300, 3400 includes dividing 1102 (see Fig. 11) the transition portion 706 into a plurality of lateral transition region slices 716. At 1104, each lateral transition region slice 716 is divided into a plurality of core samples 718 extending from a transition region surface 324 through a thickness of the of the transition portion 706. At 1106, each core sample 718 of each lateral transition region slice 716 is analyzed to determine a collective transition region fiber orientation for the corresponding core sample 718 and to determine modulus characteristics 418 of the core sample 718 in relation to adjacent core samples 718.

In still yet another example of the method 100, the 3-dimensional model 414, 3200, 3300, 3400 of the unitary composite structure 300 includes an elongated hollow portion 702, a closed end portion 704 and a transition portion 706 between the elongated hollow portion 702 and the closed end portion 704. The elongated hollow portion 702 extends longitudinally along an x-axis 308 and a circumference defines a y direction 310. In this example, the generating 108 of the modulus results data 420 includes generating 1202 (see Fig. 12) modulus results data 420 for the elongated hollow portion 702 of the 3-dimensional model 414, 3200, 3300, 3400 based on modulus characteristics 418 from analysis of the tow layup design 200 for the elongated hollow portion 702. At 1204, modulus results data 420 for the closed end portion 704 of the 3-dimensional model 414, 3200, 3300, 3400 is generated based on modulus characteristics 418 from analysis of the tow layup design 200 for the closed end portion 704. At 1206, modulus results data 420 for the transition portion 706 of the 3-dimensional model 414, 3200, 3300, 3400 is generated based on modulus characteristics 418 from analysis of the tow layup design 200 for the transition portion 706.

In a further example, the generating 1202 of the modulus results data 420 for the elongated hollow portion 702 includes arranging 1302 (see Fig. 13) the modulus results data 420 for the elongated hollow portion 702 into a plurality of lateral elongated body slices 708 and a plurality of core samples 710 following a circumference of the corresponding lateral elongated body slice 708. The core samples 710 extending from an elongated body surface 312 through a thickness of the elongated hollow portion 702. The modulus results data 420 for each core sample 710 includes a collective elongated body fiber orientation for the corresponding core sample 710 and modulus characteristics 418 of the core sample 710 in relation to adjacent core samples 710. In an even further example, the generating 1202 of the modulus results data 420 for the elongated hollow portion 702 also includes generating 1304 at least one of a tabular report, a graph and a heat map for at least one lateral elongated body slice 708 of the elongated hollow portion 702. At 1306, at least one of a tabular report, a graph and a heat map for the elongated hollow portion 702 is generated.

In another further example, the generating 1204 of the modulus results data 420 for the closed end portion 704 includes arranging 1402 (see Fig. 14) the modulus results data 420 for the closed end portion 704 into a plurality of lateral end slices 712 and a plurality of core samples 710 following a circumference of the corresponding lateral end slice 712, the core samples 710 extending from an end surface 318 through a thickness of the closed end portion 704. The modulus results data 420 for each core sample 710 includes a collective end fiber orientation for the corresponding core sample 710 and modulus characteristics 418 of the core sample 710 in relation to adjacent core samples 710. In an even further example, the generating 1204 of the modulus results data 420 for the closed end portion 704 also includes generating 1404 at least one of a tabular report, a graph 3002 and a heat map 3004 for at least one lateral end slice 712 of the closed end portion 704. At 1406, at least one of a tabular report, a graph and a heat map 2900, 3102 for the closed end portion 704 is generated.

In yet another further example, the generating 1206 of the modulus results data 420 for the transition portion 706 includes arranging 1502 (see Fig. 15) the modulus results data 420 for the transition portion 706 into a plurality of lateral transition region slices 716 and a plurality of core samples following a circumference of the corresponding lateral transition region slice 716. The core samples extending from a transition region surface 324 through a thickness of the transition portion 706. The modulus results data 420 for each core sample includes a collective transition region fiber orientation for the corresponding core sample and modulus characteristics 418 of the core sample in relation to adjacent core samples. In an even further example, the generating 1206 of the modulus results data 420 for the transition portion 706 also includes generating 1504 at least one of a tabular report, a graph 3104 and a heat map 2900, 3102 for at least one lateral transition region slice 716 of the transition portion 706. At 1506, at least one of a tabular report, a graph 3106 and a heat map 2900, 3102 for the transition portion 706 is generated.

With reference again to Figs. 1, 4 and 16, in one or more examples, a method 1600 (see Fig. 16) for analyzing a tow layup design 200 of a unitary composite structure 300 with a closed end geometry 302 includes the method of Fig. 1 and continues from 108 to 1602 where at least one of four options is performed. The first option is storing 1602 the modulus results data 420 on a data storage device 422 accessible to the at least one computing device 410. The second option is printing 1604 the modulus results data 420 on a printing device 424 accessible to the at least one computing device 410. The third option is displaying 1606 the modulus results data 420 on a display device 426 accessible to the at least one computing device 410. The fourth option is sending 1608 a message to an operator associated with the at least one computing device 410 providing notice the modulus results data 420 are available and instructions for accessing the modulus results data 420. In another example, the at least one computing device 410 may include at least one processor 428, associated memory 430 and an input device 432.

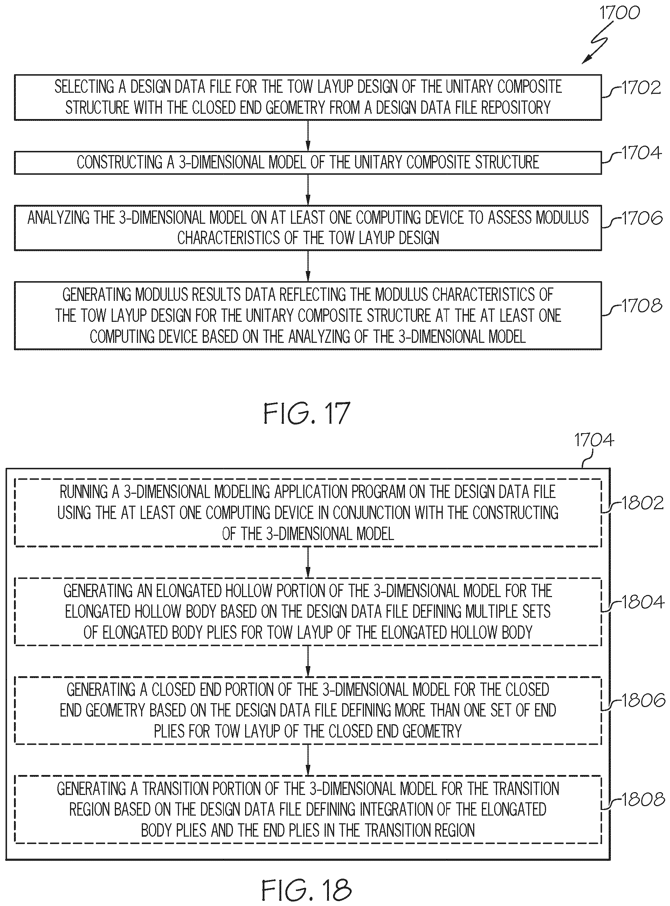

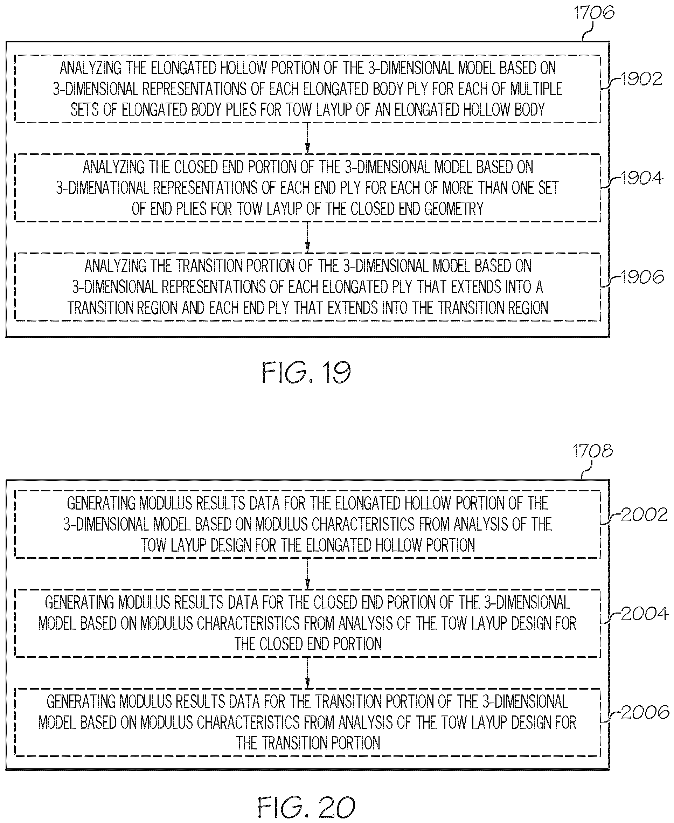

Referring generally to Figs. 2-4, 7, 17-21, 24 and 32-34, by way of examples, the present disclosure is directed to a method 1700, 2100, 2400 for analyzing a tow layup design 200 of a unitary composite structure 300 with a closed end geometry 302. Fig. 2 shows an example of the tow layup design 200. Fig. 3 shows an example of the unitary composite structure 300. Fig. 4 shows an example of a system for analyzing the tow layup design 200 of the unitary composite structure 300 with the closed end geometry 302. Fig. 7 shows an example of a 3-dimensional model 414, 3200, 3300, 3400 of the unitary composite structure 300 with the closed end geometry 302. Fig. 17 provides an example of the method 1700 for analyzing a tow layup design 200 of a unitary composite structure 300 with a closed end geometry 302. Fig. 18 provides an example of the constructing 1704 of the 3-dimensional model 414, 3200, 3300, 3400 in the method 1700 of Fig. 17. Fig. 19 provides an example of the analyzing 1706 of the 3-dimensional model 414, 3200, 3300, 3400 in the method 1700 of Fig. 17. Fig. 20 provides an example of the generating 1708 of the modulus results data 420 in the method 1700 of Fig. 17.

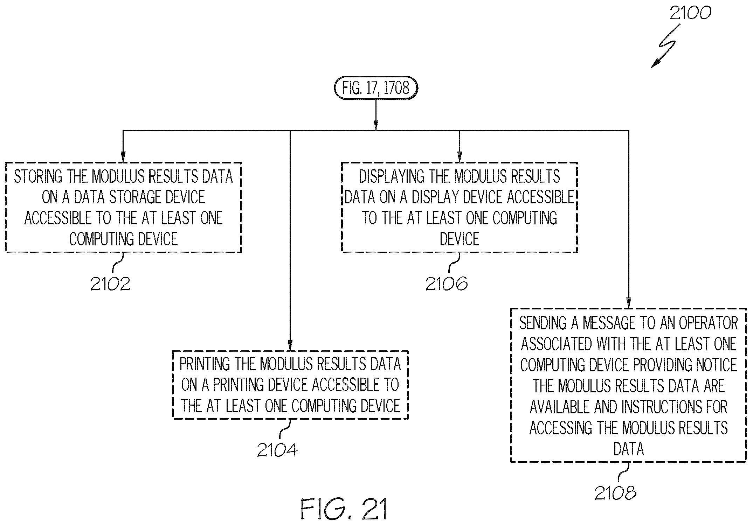

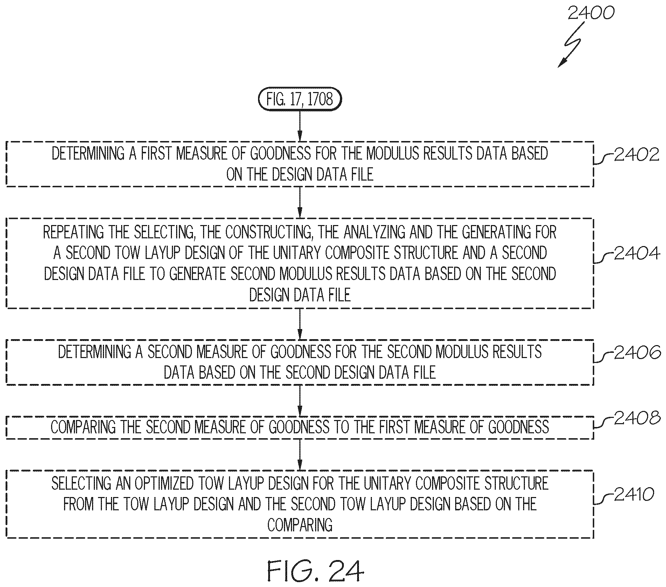

Fig. 21, in combination with Fig. 17, provides an example of the method 2100 for analyzing a tow layup design 200 of a unitary composite structure 300 with a closed end geometry 302. Fig. 24, in combination with Fig. 17, provides an example of the method 2400 for analyzing a tow layup design 200 of a unitary composite structure 300 with a closed end geometry 302. Fig. 32 shows another example of a 3-dimensional model 3200 of a unitary composite structure 300 with a closed end geometry 302. Fig. 33 shows yet another example of a 3-dimensional model 3300 of a unitary composite structure 300 with a closed end geometry 302. Fig. 34 shows still another example of a 3-dimensional model 3400 of a unitary composite structure 300 with a closed end geometry 302.

With reference again to Figs. 2-4, 17 and 32-34, in one or more examples, a method 1700 (see Fig. 17) for analyzing a tow layup design 200 of a unitary composite structure 300 with a closed end geometry 302 includes selecting 1702 a design data file 402 for the tow layup design 200 of the unitary composite structure 300 with the closed end geometry 302 from a design data file repository 404. At 1704, a 3-dimensional model 414, 3200, 3300, 3400 of the unitary composite structure 300 is constructed. At 1706, the 3-dimensional model 414, 3200, 3300, 3400 is analyzed on at least one computing device 410 to assess modulus characteristics 418 of the tow layup design 200. At 1708, modulus results data 420 reflecting the modulus characteristics 418 of the tow layup design 200 for the unitary composite structure 300 is generated at the at least one computing device 410 based on the analyzing 1706 of the 3-dimensional model 414, 3200, 3300, 3400.

With reference again to Figs. 2-4, 17 and 24, in one or more examples, a method 2400 (see Fig. 24) for analyzing a tow layup design 200 of a unitary composite structure 300 with a closed end geometry 302 includes the method 1700 of Fig. 17 and continues from 1708 to 2402 where a first measure of goodness is determined for the modulus results data 420 based on the design data file 402. At 2404, the selecting 1702, the constructing 1704, the analyzing 1706 and the generating 1708 is repeated for a second tow layup design of the unitary composite structure 300 and a second design data file to generate second modulus results data based on the second design data file. At 2406, a second measure of goodness is determined for the second modulus results data based on the second design data file. At 2408, the second measure of goodness is compared to the first measure of goodness. At 2410, an optimized tow layup design for the unitary composite structure 300 is determined from the tow layup design 200 and the second tow layup design based on the comparing 2408.

With reference again to Figs. 2-4, 7, 1721 and 32-34, in another example of the method 1700, the unitary composite structure 300 includes an elongated hollow body 304, the closed end geometry 302 and a transition region 306 between the elongated hollow body 304 and the closed end geometry 302. The elongated hollow body 304 extends longitudinally along an x-axis 308 and a circumference defines a y direction 310. In this example, the design data file 402 includes a first design data section 204, a second design data section 208 and a third design data section 212. The first design data section 204 defines multiple sets of elongated body plies for tow layup of the elongated hollow body 304. The second design data section 208 defines more than one set of end plies for tow layup of the closed end geometry 302. The third design data section 212 defines integration of the elongated body plies and the end plies in the transition region 306.

In yet another example of the method 1700, the constructing 1704 of the 3-dimensional model 414, 3200, 3300, 3400 includes running 1802 (see Fig. 18) a 3-dimensional modeling application program 412 on the design data file 402 using the at least one computing device 410 in conjunction with the constructing 1704 of the 3-dimensional model 414, 3200, 3300, 3400. In a further example, the unitary composite structure 300 includes an elongated hollow body 304, the closed end geometry 302 and a transition region 306 between the elongated hollow body 304 and the closed end geometry 302. The elongated hollow body 304 extends longitudinally along an x-axis 308 and a circumference defines a y direction 310. In this example, the constructing 1704 of the 3-dimensional model 414, 3200, 3300, 3400 also includes generating 1804 an elongated hollow portion 702 of the 3-dimensional model 414, 3200, 3300, 3400 for the elongated hollow body 304 based on the design data file 402 defining multiple sets of elongated body plies for tow layup of the elongated hollow body 304. At 1806, a closed end portion 704 of the 3-dimensional model 414, 3200, 3300, 3400 is generated for the closed end geometry 302 based on the design data file 402 defining more than one set of end plies for tow layup of the closed end geometry 302. At 1808, a transition portion 706 of the 3-dimensional model 414, 3200, 3300, 3400 is generated for the transition region 306 based on the design data file 402 defining integration of the elongated body plies and the end plies in the transition region 306. In still another example of the method 1700, the at least one computing device 410 is configured to run a modulus analysis application program 416 in conjunction with the analyzing 1706 of the 3-dimensional model 414, 3200, 3300, 3400 to identify the modulus characteristics 418.

In still yet another example of the method 1700, the 3-dimensional model 414, 3200, 3300, 3400 of the unitary composite structure 300 includes an elongated hollow portion 702, a closed end portion 704 and a transition portion 706 between the elongated hollow portion 702 and the closed end portion 704. The elongated hollow portion 702 extends longitudinally along an x-axis 308 and a circumference defines a y direction 310. In this example, the analyzing 1706 of the 3-dimensional model 414, 3200, 3300, 3400 includes analyzing 1902 (see Fig. 19) the elongated hollow portion 702 of the 3-dimensional model 414, 3200, 3300, 3400 based on 3-dimensional representations of each elongated body ply for each of multiple sets of elongated body plies for tow layup of an elongated hollow body 304. Each elongated body ply includes elongated body fiber orientation information. At 1904, the closed end portion 704 of the 3-dimensional model 414, 3200, 3300, 3400 is analyzed based on 3-dimenational representations of each end ply for each of more than one set of end plies for tow layup of the closed end geometry 302. Each end ply includes end fiber orientation information. At 1906, the transition portion 706 of the 3-dimensional model 414, 3200, 3300, 3400 is analyzed based on 3-dimensional representations of each elongated body ply that extends into a transition region 306 and each end ply that extends into the transition region 306.

In another example of the method 1700, the 3-dimensional model 414, 3200, 3300, 3400 of the unitary composite structure 300 includes an elongated hollow portion 702, a closed end portion 704 and a transition portion 706 between the elongated hollow portion 702 and the closed end portion 704. The elongated hollow portion 702 extends longitudinally along an x-axis 308 and a circumference defines a y direction 310. In this example, the generating 1708 of the modulus results data 420 includes generating 2002 (see Fig. 20) modulus results data 420 for the elongated hollow portion 702 of the 3-dimensional model 414, 3200, 3300, 3400 based on modulus characteristics 418 from analysis of the tow layup design 200 for the elongated hollow portion 702. At 2004, modulus results data 420 for the closed end portion 704 of the 3-dimensional model 414, 3200, 3300, 3400 is generated based on modulus characteristics 418 from analysis of the tow layup design 200 for the closed end portion 704. At 2006, modulus results data 420 for the transition portion 706 of the 3-dimensional model 414, 3200, 3300, 3400 is generated based on modulus characteristics 418 from analysis of the tow layup design 200 for the transition portion 706.

With reference again to Figs. 4, 17 and 21, in one or more examples, a method 2100 (see Fig. 21) for analyzing a tow layup design 200 of a unitary composite structure 300 with a closed end geometry 302 includes the method of Fig. 17 and continues from 1708 to 2102 where at least one of four options is performed. The first option is storing 2102 the modulus results data 420 on a data storage device 422 accessible to the at least one computing device 410. The second option is printing 2104 the modulus results data 420 on a printing device 424 accessible to the at least one computing device 410. The third option is displaying 2106 the modulus results data 420 on a display device 426 accessible to the at least one computing device 410. The fourth option is sending 2108 a message to an operator associated with the at least one computing device 410 providing notice the modulus results data 420 are available and instructions for accessing the modulus results data 420.

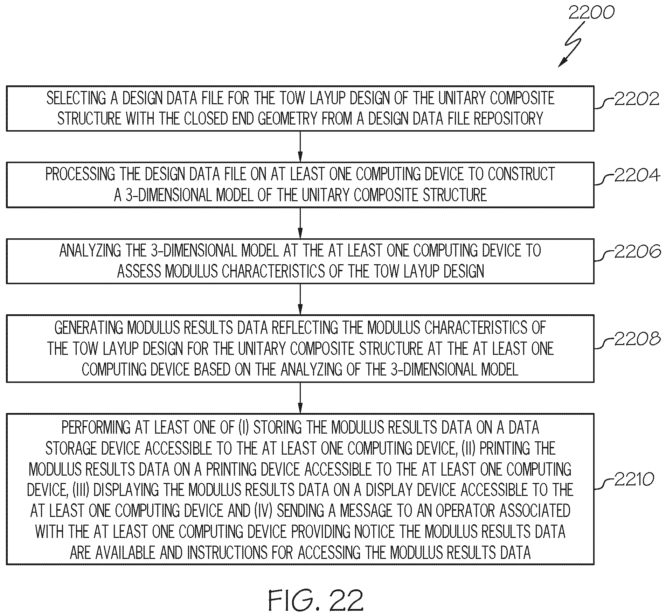

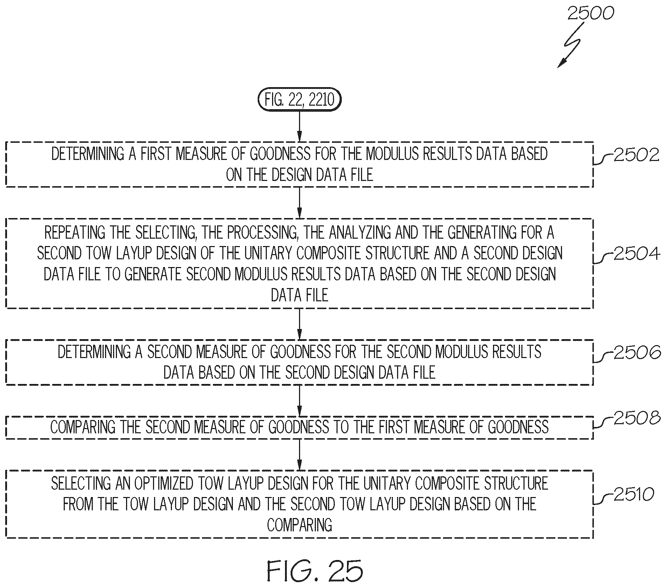

Referring generally to Figs. 2-4, 22, 25 and 32-34, by way of examples, the present disclosure is directed to a method 2200, 2500 for analyzing a tow layup design 200 of a unitary composite structure 300 with a closed end geometry 302. Fig. 2 shows an example of the tow layup design 200. Fig. 3 shows an example of the unitary composite structure 300. Fig. 4 shows an example of a system for analyzing the tow layup design 200 of the unitary composite structure 300 with the closed end geometry 302. Fig. 22 provides an example of the method 2200 for analyzing a tow layup design 200 of a unitary composite structure 300 with a closed end geometry 302. Fig. 25, in combination with Fig. 22, provides an example of the method 2500 for analyzing a tow layup design 200 of a unitary composite structure 300 with a closed end geometry 302. Fig. 32 shows another example of a 3-dimensional model 3200 of a unitary composite structure 300 with a closed end geometry 302. Fig. 33 shows yet another example of a 3-dimensional model 3300 of a unitary composite structure 300 with a closed end geometry 302. Fig. 34 shows still another example of a 3-dimensional model 3400 of a unitary composite structure 300 with a closed end geometry 302.

With reference again to Figs. 2-4, 22 and 32-34, in one or more examples, a method 2200 (see Fig. 22) for analyzing a tow layup design 200 of a unitary composite structure 300 with a closed end geometry 302 includes selecting 2202 a design data file 402 for the tow layup design 200 of the unitary composite structure 300 with the closed end geometry 302 from a design data file repository 404. At 2204, the design data file 402 is processed on at least one computing device 410 to construct a 3-dimensional model 414, 3200, 3300, 3400 of the unitary composite structure 300. At 2206, the 3-dimensional model 414, 3200, 3300, 3400 is analyzed at the at least one computing device 410 to assess modulus characteristics 418 of the tow layup design 200. At 2208, modulus results data 420 reflecting the modulus characteristics 418 of the tow layup design 200 for the unitary composite structure 300 is generated at the at least one computing device 410 based on the analyzing 2206 of the 3-dimensional model 414, 3200, 3300, 3400. At 2210, at least one of the four options is performed. The first option is storing the modulus results data 420 on a data storage device 422 accessible to the at least one computing device 410. The second option is printing the modulus results data 420 on a printing device 424 accessible to the at least one computing device 410. The third option is displaying the modulus results data 420 on a display device 426 accessible to the at least one computing device 410. The fourth option is sending a message to an operator associated with the at least one computing device 410 providing notice the modulus results data 420 are available and instructions for accessing the modulus results data 420.

With reference again to Figs. 3, 4, 22 and 25, in one or more examples, a method 2500 (see Fig. 25) for analyzing a tow layup design 200 of a unitary composite structure 300 with a closed end geometry 302 includes the method 2200 of Fig. 22 and continues from 2210 to 2502 where a first measure of goodness is determined for the modulus results data 420 based on the design data file 402. At 2504, the selecting 2202, the processing 2204, the analyzing 2206 and the generating 2208 is repeated for a second tow layup design of the unitary composite structure 300 and a second design data file to generate second modulus results data based on the second design data file. At 2506, a second measure of goodness is determined for the second modulus results data based on the second design data file. At 2508, the second measure of goodness is compared to the first measure of goodness. At 2510, an optimized tow layup design for the unitary composite structure 300 is selected from the tow layup design 200 and the second tow layup design based on the comparing 2508.

With reference again to Figs. 2-4, 22 and 32-34, in another example of the method 2200, the at least one computing device 410 is configured to run a 3-dimensional modeling application program 412 in conjunction with the processing 2204 of the design data file 402 to construct the 3-dimensional model 414, 3200, 3300, 3400. In yet another example of the method 2200, the at least one computing device 410 is configured to run a modulus analysis application program 416 in conjunction with the analyzing 2206 of the 3-dimensional model 414, 3200, 3300, 3400 to identify the modulus characteristics 418.

In still another example of the method 2200, a first set of end plies in the design data file 402 includes a first end ply with first physical characteristics, a second end ply with second physical characteristics different from the first physical characteristics, a third end ply with third physical characteristics different from the second physical characteristics and a fourth end ply with fourth physical characteristics different from the third physical characteristics. In a further example, a fiber angle for the first end ply through the fourth end ply includes an average of 45 degrees. In another further example, the first set of end plies also includes a fifth end ply with fifth physical characteristics different from the fourth physical characteristics. In an even further example, a fiber angle for the first end ply through the fifth end ply includes an average of 36 degrees. In another even further example, the first set of end plies also includes a sixth end ply with sixth physical characteristics different from the fifth physical characteristics. In an even yet further example, a fiber angle for the first end ply through the sixth end ply includes an average of 30 degrees. In another even yet further example, the first set of end plies also includes a seventh end ply and an eighth end ply. The seventh end ply with seventh physical characteristics different from the sixth physical characteristics. The eighth end ply with eighth physical characteristics different from the seventh physical characteristics. In an even still further example, a fiber angle for the first end ply through the eighth end ply includes an average of 22.5 degrees.

Examples of methods 100, 1600, 1700, 2100, 2200, 2300, 2400, 2500 for analyzing a tow layup design 200 of a unitary composite structure 300 with a closed end geometry 302 may be related to or used in the context of aircraft manufacturing. Although an aircraft example is described, the examples and principles disclosed herein may be applied to other products in the aerospace industry and other industries, such as the automotive industry, the space industry, the construction industry and other design and manufacturing industries. Accordingly, in addition to aircraft, the examples and principles disclosed herein may apply to the use of various products in the manufacture of various types of vehicles and in the construction of various types of buildings.

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic and/or operational step described in connection with the example is included in at least one aspect, embodiment and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc., are used herein merely as labels and are not intended to impose ordinal, positional, or hierarchical requirements on the items to which these terms refer. Moreover, reference to, e.g., a "second" item does not require or preclude the existence of, e.g., a "first" or lower-numbered item and/or, e.g., a "third" or higher-numbered item.

As used herein, the phrase "at least one of," when used with a list of items, means different combinations of one or more of the listed items may be used and only one of each item in the list may be needed. For example, "at least one of item A, item B and item C" may include, without limitation, item A or item A and item B. This example also may include item A, item B and item C or item B and item C. In other examples, "at least one of" may be, for example, without limitation, two of item A, one of item B and ten of item C; four of item B and seven of item C; and other suitable combinations. As used herein, the term "and/or" and the "/" symbol includes any and all combinations of one or more of the associated listed items.

As used herein, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

In Figs. 1, 6 and 8-25, referred to above, the blocks may represent operations, steps and/or portions thereof and lines connecting the various blocks do not imply any particular order or dependency of the operations or portions thereof. It will be understood that not all dependencies among the various disclosed operations are necessarily represented. Figs. 1, 6 and 8-25 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

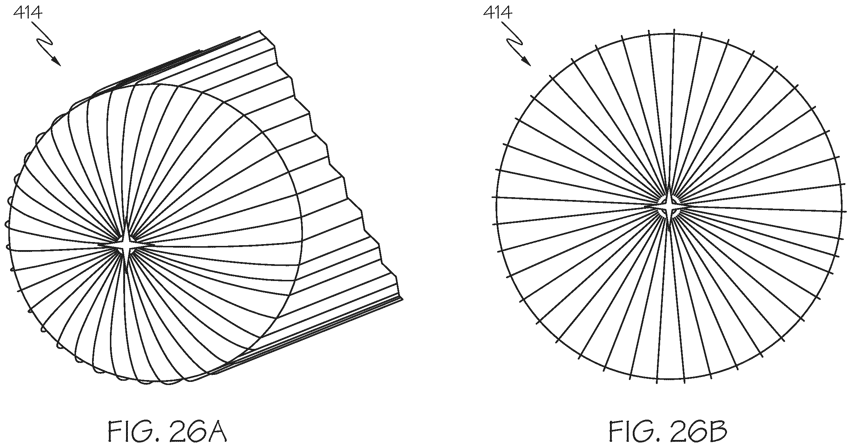

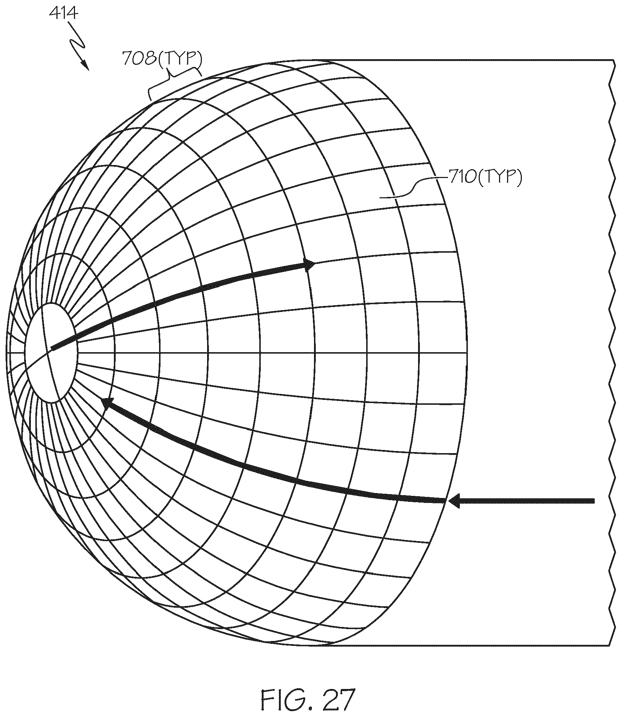

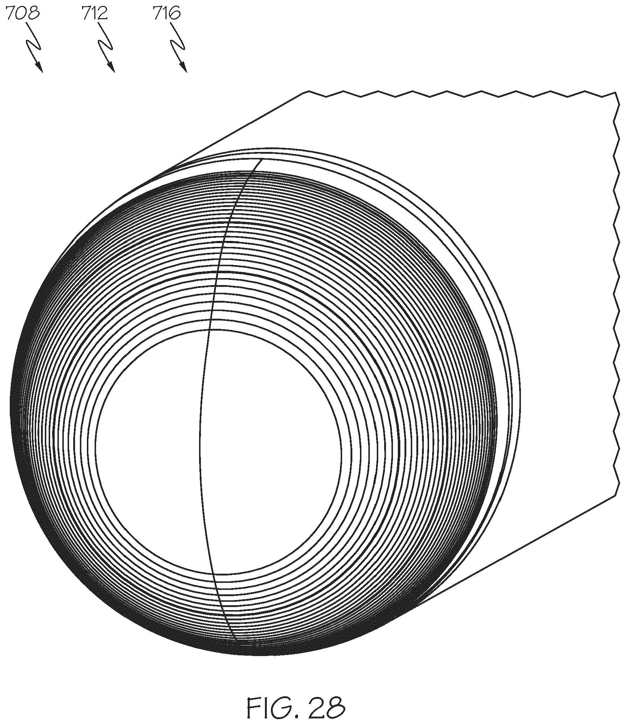

In Figs. 2-5, 7, 26A-B and 27-34, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features and/or components described and illustrated in Figs. 2-5, 7, 26A-B and 27-34, referred to above, need be included in every example and not all elements, features and/or components described herein are necessarily depicted in each illustrative example. Accordingly, some of the elements, features and/or components described and illustrated in Figs. 2-5, 7, 26A-B and 27-34 may be combined in various ways without the need to include other features described and illustrated in Figs. 2-5, 7, 26A-B and 27-34, other drawing figures and/or the accompanying disclosure, even though such combination or combinations are not explicitly illustrated herein. Similarly, additional features not limited to the examples presented, may be combined with some or all the features shown and described herein. Unless otherwise explicitly stated, the schematic illustrations of the examples depicted in Figs. 2-5, 7, 26A-B and 27-34, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features and/or components that serve a similar, or at least substantially similar, purpose are labeled with like numbers in each of Figs. 2-5, 7, 26A-B and 27-34 and such elements, features and/or components may not be discussed in detail herein with reference to each of Figs. 2-5, 7, 26A-B and 27-34. Similarly, all elements, features and/or components may not be labeled in each of Figs. 2-5, 7, 26A-B and 27-34, but reference numerals associated therewith may be utilized herein for consistency.

Further, references throughout the present specification to features, advantages, or similar language used herein do not imply that all the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages and similar language used throughout the present disclosure may, but does not necessarily, refer to the same example.

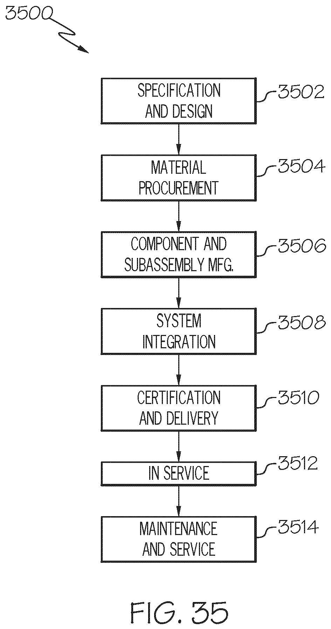

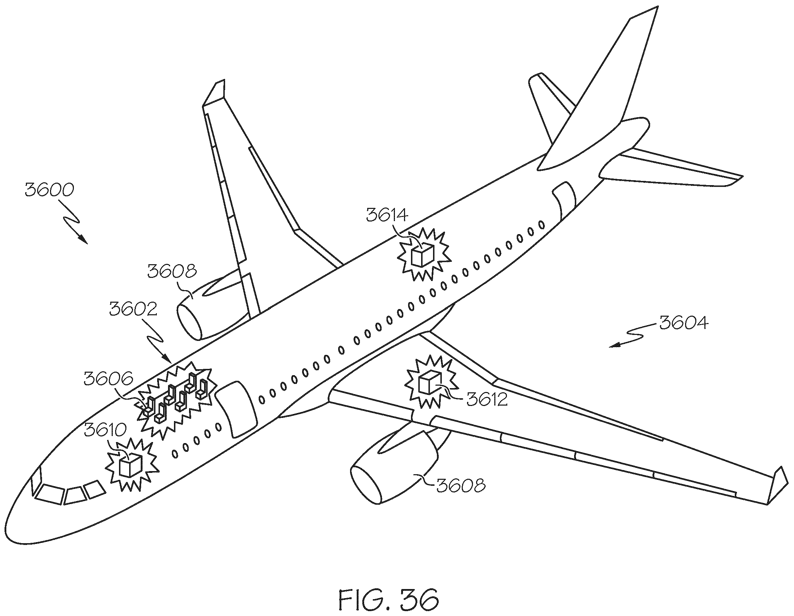

Examples of the subject matter disclosed herein may be described in the context of aircraft manufacturing and service method 3500 as shown in Fig. 35 and aircraft 3600 as shown in Fig. 36. In one or more examples, the disclosed methods 100, 1600, 1700, 2100, 2200, 2300, 2400, 2500 for analyzing a tow layup design 200 of a unitary composite structure 300 with a closed end geometry 302 may be used in aircraft manufacturing. During pre-production, the service method 3500 may include specification and design (block 3502) of aircraft 3600 and material procurement (block 3504). During production, component and subassembly manufacturing (block 3506) and system integration (block 3508) of aircraft 3600 may take place. Thereafter, aircraft 3600 may go through certification and delivery (block 3510) to be placed in service (block 3512). While in service, aircraft 3600 may be scheduled for routine maintenance and service (block 3514). Routine maintenance and service may include modification, reconfiguration, refurbishment, etc. of one or more systems of aircraft 3600.

Each of the processes of the service method 3500 may be performed or carried out by a system integrator, a third party and/or an operator (e.g., a customer). For the purposes of this description, a system integrator may include, without limitation, any number of aircraft manufacturers and major-system subcontractors; a third party may include, without limitation, any number of vendors, subcontractors and suppliers; and an operator may be an airline, leasing company, military entity, service organization and so on.

As shown in Fig. 36, aircraft 3600 produced by the service method 3500 may include airframe 3602 with a plurality of high-level systems 3604 and interior 3606. Examples of high-level systems 3604 include one or more of propulsion system 3608, electrical system 3610, hydraulic system 3612 and environmental system 3614. Any number of other systems may be included. Although an aerospace example is shown, the principles disclosed herein may be applied to other industries, such as the automotive industry. Accordingly, in addition to aircraft 3600, the principles disclosed herein may apply to other vehicles, e.g., land vehicles, marine vehicles, space vehicles, etc.

The disclosed methods 100, 1600, 1700, 2100, 2200, 2300, 2400, 2500 for analyzing a tow layup design 200 of a unitary composite structure 300 with a closed end geometry 302 may be employed during any one or more of the stages of the manufacturing and service method 3500. For example, components or subassemblies corresponding to component and subassembly manufacturing (block 3506) may be fabricated or manufactured in a manner similar to components or subassemblies produced while aircraft 3600 is in service (block 3512). Also, one or more examples of the system(s), method(s), or combination thereof may be utilized during production stages (block 3506 and block 3508), for example, by substantially expediting assembly of or reducing the cost of aircraft 3600. Similarly, one or more examples of the system or method realizations, or a combination thereof, may be utilized, for example and without limitation, while aircraft 3600 is in service (block 3512) and/or during maintenance and service (block 3514).

The described features, advantages and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the methods 100, 1600, 1700, 2100, 2200, 2300, 2400, 2500 for analyzing a tow layup design 200 of a unitary composite structure 300 with a closed end geometry 302 have been shown and described, modifications may occur to those skilled in the art upon reading the specification. The present application includes such modifications and is limited only by the scope of the claims.

The disclosure also comprises the following clauses:
1. A method for analyzing a tow layup design of a unitary composite structure with a closed end geometry, comprising:
   receiving a design data file for the tow layup design of the unitary composite structure with the closed end geometry from a design data file repository via a communication network and a network interface to at least one computing device;
   processing the design data file at the at least one computing device to construct a 3-dimensional model of the unitary composite structure;
   analyzing the 3-dimensional model at the at least one computing device to assess modulus characteristics of the tow layup design; and
   generating modulus results data reflecting the modulus characteristics of the tow layup design for the unitary composite structure at the at least one computing device based on the analyzing of the 3-dimensional model.
2. The method of Clause 1, further comprising:
   determining a first measure of goodness for the modulus results data based on the design data file;
   repeating the receiving, the processing, the analyzing and the generating for a second tow layup design of the unitary composite structure and a second design data file to generate second modulus results data based on the second design data file;
   determining a second measure of goodness for the second modulus results data based on the second design data file;
   comparing the second measure of goodness to the first measure of goodness; and
   selecting an optimized tow layup design for the unitary composite structure from the tow layup design and the second tow layup design based on the comparing.
3. The method of Clause 2, wherein the first measure of goodness and the second measure of goodness comprise at least one of an isotropic measure over the 3-dimensional model or a portion thereof, a variance measure of laminate properties over the 3-dimensional model or a portion thereof and a modulus measure of a select characteristic over the 3-dimensional model or a portion thereof.
4. The method of any one of the preceding Clauses, the unitary composite structure comprising:
   an elongated hollow body;
   the closed end geometry; and
   a transition region between the elongated hollow body and the closed end geometry.
5. The method of Clause 4, the tow layup design comprising:
   an elongated body layup design comprising a first design data section within the design data file defining multiple sets of elongated body plies for tow layup of the elongated hollow body;
   a closed end layup design comprising a second design data section within the design data file defining more than one set of end plies for tow layup of the closed end geometry; and
   a transition layup design comprising a third design data section within the design data file defining integration of the elongated body plies and the end plies.
6. The method of Clause 4 or 5, wherein the elongated hollow body comprises at least one of a cylinder, a pipe, a tube, a cylindrical body, an ellipsoidal body and a contoured body.
7. The method of any one of the preceding Clauses, wherein the closed end geometry comprises at least one of a dome, a hemispherical dome, an elliptical dome, a semi-elliptical head, a torispherical head and a dished head.
8. The method of any one of the preceding Clauses, wherein the unitary composite structure comprises an elongated hollow body, the closed end geometry and a transition region between the elongated hollow body and the closed end geometry, wherein the elongated hollow body extends longitudinally along an x-axis and a circumference defines a y direction, the design data file comprising:
   a first design data section defining multiple sets of elongated body plies for tow layup of the elongated hollow body;
   a second design data section defining more than one set of end plies for tow layup of the closed end geometry; and
   a third design data section defining integration of the elongated body plies and the end plies in the transition region.
9. The method of Clause 8, the first design data section comprising:
   a set of geometrical dimensions for an elongated body surface of a mandrel used for tow layup of the elongated body plies, the elongated body surface associated with the elongated hollow body of the unitary composite structure;
   a location of an elongated body reference axis on the elongated body surface to define a zero-degree fiber angle for the elongated body plies; and
   an elongated body fiber angle for each set of elongated body plies in relation to the elongated body reference axis.
10. The method of Clause 9, wherein the elongated body fiber angle for each set of elongated body plies is based on a relative distribution of elongated body plies at 0 degrees, 45 degrees, -45 degrees.
11. The method of Clause 8, 9 or 10, the second design data section comprising:
   a set of geometrical dimensions for an end surface of a mandrel used for tow layup of the end plies, the end surface associated with the closed end geometry of the unitary composite structure;
   a location of an end polar reference axis on the end surface to define a zero-degree fiber angle for the end plies; and
   an end fiber angle for each set of end plies in relation to the end polar reference axis.
12. The method of Clause 11, wherein the end fiber angle for each set of end plies is based on 180 degrees divided by a quantity of end plies within the corresponding set of end plies.
13. The method of Clause 12, wherein the quantity of end plies within the corresponding set of end plies comprises at least one of two end plies, three end plies, four end plies, five end plies, six end plies, eight end plies, nine end plies and ten end plies.
14. The method of Clause 12 or 13, wherein the end fiber angle for the corresponding set of end plies comprises at least one of 90 degrees to 60 degrees, 60 degrees to 45 degrees, 45 degrees to 36 degrees, 36 degrees to 30 degrees, 30 degrees to 22.5 degrees, 22.5 degrees to 20 degrees, 20 degrees to 18 degrees and less than 18 degrees.
15. The method of any one of Clauses 8-14, the third design data section comprising:
   a set of geometrical dimensions for a transition region surface of a mandrel used for integrated tow layup of the elongated body plies and the end plies, the transition region surface associated with the transition region of the unitary composite structure;
   a location of an elongated body reference axis on an elongated body surface to define a zero-degree fiber angle for the elongated body plies;
   an elongated body fiber angle for each set of elongated body plies in relation to the elongated body reference axis;
   identification of elongated body plies within each set of elongated body plies that extend into the transition region;
   physical dimensions for portions of the elongated body plies within each set of elongated body plies that extend into the transition region;
   a location of an end polar reference axis on an end surface to define a zero-degree fiber angle for the end plies;
   an end fiber angle for each set of end plies in relation to the end polar reference axis;
   identification of end plies within each set of end plies that extend into the transition region; and
   physical dimensions for portions of end plies within each set of end plies that extend into the transition region.
16. The method of Clause 15, wherein the elongated body plies that extend into the transition region and the end plies that extend into the transition region form a joint within the transition region.
17. The method of Clause 16, wherein the joint within the transition region comprises at least one of a scarf joint, a double scarf joint, an overlap joint, a butt joint, a series of joints, a series of joints at a common longitudinal location and a series of joints at staggered longitudinal locations.
18. The method of Clause 15, 16, or 17, wherein at least a portion of the elongated body plies that extend into the transition region overlap with at least a portion of the end plies that extend into the transition region.
19. The method of any one of Clauses 15-18, wherein at least a portion of the elongated body plies that extend into the transition region abut at least a portion of the end plies that extend into the transition region.
20. The method of any one of the preceding Clauses, wherein the at least one computing device is configured to run a 3-dimensional modeling application program in conjunction with the processing of the design data file to construct the 3-dimensional model.
21. The method of any one of the preceding Clauses, wherein the unitary composite structure comprises an elongated hollow body, the closed end geometry and a transition region between the elongated hollow body and the closed end geometry, wherein the elongated hollow body extends longitudinally along an x-axis and a circumference defines a y direction, the processing of the design data file comprising:
   generating an elongated hollow portion of the 3-dimensional model for the elongated hollow body based on the design data file defining multiple sets of elongated body plies for tow layup of the elongated hollow body;
   generating a closed end portion of the 3-dimensional model for the closed end geometry based on the design data file defining more than one set of end plies for tow layup of the closed end geometry; and
   generating a transition portion of the 3-dimensional model for the transition region based on the design data file defining integration of the elongated body plies and the end plies in the transition region.
22. The method of Clause 21, wherein the elongated hollow portion of the 3-dimensional model comprises each elongated body ply of each of the multiple sets of elongated body plies and elongated body fiber orientation information for each elongated body ply.
23. The method of Clause 21 or 22, wherein the closed end portion of the 3-dimensional model comprises each end ply of each of the more than one set of end plies and end fiber orientation information for each end ply.
24. The method of any one of Clauses 21-23, wherein the transition portion of the 3-dimensional model comprises each elongated body ply of each of the multiple sets of elongated body plies that extend into the transition region and elongated body fiber orientation information for each of said elongated body plies, and
   wherein the transition portion of the 3-dimensional model comprises each end ply of each of the more than one set of end plies that extend into the transition region and end fiber orientation information for each of said end plies.
25. The method of any one of the preceding Clauses, wherein the at least one computing device is configured to run a modulus analysis application program in conjunction with the analyzing of the 3-dimensional model to identify the modulus characteristics.
26. The method of any one of the preceding Clauses, wherein the 3-dimensional model of the unitary composite structure comprises an elongated hollow portion, the closed end portion and a transition portion between the elongated hollow portion and the closed end portion, wherein the elongated hollow portion extends longitudinally along an x-axis and a circumference defines a y direction, the analyzing of the 3-dimensional model comprising:
   analyzing the elongated hollow portion of the 3-dimensional model based on 3-dimensional representations of each elongated body ply for each of multiple sets of elongated body plies for tow layup of an elongated hollow body, each elongated body ply comprising elongated body fiber orientation information;
   analyzing the closed end portion of the 3-dimensional model based on 3-dimenational representations of each end ply for each of more than one set of end plies for tow layup of the closed end geometry, each end ply comprising end fiber orientation information; and
   analyzing the transition portion of the 3-dimensional model based on 3-dimensional representations of each elongated body ply that extends into the transition region and each end ply that extends into the transition region.
27. The method of Clause 26, the analyzing of the elongated hollow portion of the 3-dimensional model comprising:
   dividing the elongated hollow portion into a plurality of lateral elongated body slices;
   dividing each lateral elongated body slice into a plurality of core samples extending from an elongated body surface through a thickness of the of the elongated hollow portion; and
   analyzing each core sample of each lateral elongated body slice to determine a collective elongated body fiber orientation for the corresponding core sample and to determine modulus characteristics of the core sample in relation to adjacent core samples.
28. The method of Clause 26 or 27, the analyzing of the closed end portion of the 3-dimensional model comprising:
   dividing the closed end portion into a plurality of lateral end slices;
   dividing each lateral end slice into a plurality of core samples extending from an end surface through a thickness of the of the closed end portion; and
   analyzing each core sample of each lateral end slice to determine a collective end fiber orientation for the corresponding core sample and to determine modulus characteristics of the core sample in relation to adjacent core samples.
29. The method of any one of Clauses 26-28, the analyzing of the transition portion of the 3-dimensional model comprising:
   dividing the transition portion into a plurality of lateral transition region slices;
   dividing each lateral transition region slice into a plurality of core samples extending from a transition region surface through a thickness of the of the transition portion; and
   analyzing each core sample of each lateral transition region slice to determine a collective transition region fiber orientation for the corresponding core sample and to determine modulus characteristics of the core sample in relation to adjacent core samples.
30. The method of any one of the preceding Clauses, wherein the 3-dimensional model of the unitary composite structure comprises an elongated hollow portion, a closed end portion and a transition portion between the elongated hollow portion and the closed end portion, wherein the elongated hollow portion extends longitudinally along an x-axis and a circumference defines a y direction, the generating of the modulus results data comprising:
   generating modulus results data for the elongated hollow portion of the 3-dimensional model based on modulus characteristics from analysis of the tow layup design for the elongated hollow portion;
   generating modulus results data for the closed end portion of the 3-dimensional model based on modulus characteristics from analysis of the tow layup design for the closed end portion; and
   generating modulus results data for the transition portion of the 3-dimensional model based on modulus characteristics from analysis of the tow layup design for the transition portion.
31. The method of Clause 30, the generating of the modulus results data for the elongated hollow portion comprising:
   arranging the modulus results data for the elongated hollow portion into a plurality of lateral elongated body slices and a plurality of core samples following a circumference of the corresponding lateral elongated body slice, the core samples extending from an elongated body surface through a thickness of the elongated hollow portion, and
   wherein the modulus results data for each core sample comprises a collective elongated body fiber orientation for the corresponding core sample and modulus characteristics of the core sample in relation to adjacent core samples.
32. The method of Clause 31, the generating of the modulus results data for the elongated hollow portion further comprising:
   generating at least one of a tabular report, a graph and a heat map for at least one lateral elongated body slice of the elongated hollow portion; and
   generating at least one of a tabular report, a graph and a heat map for the elongated hollow portion.
33. The method of any one of Clauses 30-32, the generating of the modulus results data for the closed end portion comprising:
   arranging the modulus results data for the closed end portion into a plurality of lateral end slices and a plurality of core samples following a circumference of the corresponding lateral end slice, the core samples extending from an end surface through a thickness of the closed end portion, and
   wherein the modulus results data for each core sample comprises a collective end fiber orientation for the corresponding core sample and modulus characteristics of the core sample in relation to adjacent core samples.
34. The method of Clause 33, the generating of the modulus results data for the closed end portion further comprising:
   generating at least one of a tabular report, a graph and a heat map for at least one lateral end slice of the closed end portion; and
   generating at least one of a tabular report, a graph and a heat map for the closed end portion.
35. The method of any one of Clauses 30-34, the generating of the modulus results data for the transition portion comprising:
   arranging the modulus results data for the transition portion into a plurality of lateral transition region slices and a plurality of core samples following a circumference of the corresponding lateral transition region slice, the core samples extending from a transition region surface through a thickness of the transition portion, and
   wherein the modulus results data for each core sample comprises a collective transition region fiber orientation for the corresponding core sample and modulus characteristics of the core sample in relation to adjacent core samples.
36. The method of Clause 35, the generating of the modulus results data for the transition portion further comprising:
   generating at least one of a tabular report, a graph and a heat map for at least one lateral transition region slice of the transition portion; and
   generating at least one of a tabular report, a graph and a heat map for the transition portion.
37. The method of any one of the preceding Clauses, further comprising at least one of:
   storing the modulus results data on a data storage device accessible to the at least one computing device;
   printing the modulus results data on a printing device accessible to the at least one computing device;
   displaying the modulus results data on a display device accessible to the at least one computing device; and
   sending a message to an operator associated with the at least one computing device providing notice the modulus results data are available and instructions for accessing the modulus results data.
38. A method for analyzing a tow layup design of a unitary composite structure with a closed end geometry, comprising:
   selecting a design data file for the tow layup design of the unitary composite structure with the closed end geometry from a design data file repository;
   constructing a 3-dimensional model of the unitary composite structure;
   analyzing the 3-dimensional model on at least one computing device to assess modulus characteristics of the tow layup design; and
   generating modulus results data reflecting the modulus characteristics of the tow layup design for the unitary composite structure at the at least one computing device based on the analyzing of the 3-dimensional model.
39. The method of Clause 38, further comprising:
   determining a first measure of goodness for the modulus results data based on the design data file;
   repeating the selecting, the constructing, the analyzing and the generating for a second tow layup design of the unitary composite structure and a second design data file to generate second modulus results data based on the second design data file;
   determining a second measure of goodness for the second modulus results data based on the second design data file;
   comparing the second measure of goodness to the first measure of goodness; and
   selecting an optimized tow layup design for the unitary composite structure from the tow layup design and the second tow layup design based on the comparing.
40. The method of Clause 38 or 39, wherein the unitary composite structure comprises an elongated hollow body, the closed end geometry and a transition region between the elongated hollow body and the closed end geometry, wherein the elongated hollow body extends longitudinally along an x-axis and a circumference defines a y direction, the design data file comprising:
   a first design data section defining multiple sets of elongated body plies for tow layup of the elongated hollow body;
   a second design data section defining more than one set of end plies for tow layup of the closed end geometry; and
   a third design data section defining integration of the elongated body plies and the end plies in the transition region.
41. The method of any one of Clauses 38-40, the constructing of the 3-dimensional model comprising:
   running a 3-dimensional modeling application program on the design data file using the at least one computing device in conjunction with the constructing of the 3-dimensional model.
42. The method of Clause 41, wherein the unitary composite structure comprises an elongated hollow body, the closed end geometry and a transition region between the elongated hollow body and the closed end geometry, wherein the elongated hollow body extends longitudinally along an x-axis and a circumference defines a y direction, the constructing of the 3-dimensional model further comprising:
   generating an elongated hollow portion of the 3-dimensional model for the elongated hollow body based on the design data file defining multiple sets of elongated body plies for tow layup of the elongated hollow body;
   generating a closed end portion of the 3-dimensional model for the closed end geometry based on the design data file defining more than one set of end plies for tow layup of the closed end geometry; and
   generating a transition portion of the 3-dimensional model for the transition region based on the design data file defining integration of the elongated body plies and the end plies in the transition region.
43. The method of any one of Clauses 38-42, wherein the at least one computing device is configured to run a modulus analysis application program in conjunction with the analyzing of the 3-dimensional model to identify the modulus characteristics.
44. The method of any one of Clauses 38-43, wherein the 3-dimensional model of the unitary composite structure comprises an elongated hollow portion, a closed end portion and a transition portion between the elongated hollow portion and the closed end portion, wherein the elongated hollow portion extends longitudinally along an x-axis and a circumference defines a y direction, the analyzing of the 3-dimensional model comprising:
   analyzing the elongated hollow portion of the 3-dimensional model based on 3-dimensional representations of each elongated body ply for each of multiple sets of elongated body plies for tow layup of an elongated hollow body, each elongated body ply comprising elongated body fiber orientation information;
   analyzing the closed end portion of the 3-dimensional model based on 3-dimenational representations of each end ply for each of more than one set of end plies for tow layup of the closed end geometry, each end ply comprising end fiber orientation information; and
   analyzing the transition portion of the 3-dimensional model based on 3-dimensional representations of each elongated body ply that extends into a transition region and each end ply that extends into the transition region.
45. The method of any one of Clauses 38-44, wherein the 3-dimensional model of the unitary composite structure comprises an elongated hollow portion, a closed end portion and a transition portion between the elongated hollow portion and the closed end portion, wherein the elongated hollow portion extends longitudinally along an x-axis and a circumference defines a y direction, the generating of the modulus results data comprising:
   generating modulus results data for the elongated hollow portion of the 3-dimensional model based on modulus characteristics from analysis of the tow layup design for the elongated hollow portion;
   generating modulus results data for the closed end portion of the 3-dimensional model based on modulus characteristics from analysis of the tow layup design for the closed end portion; and
   generating modulus results data for the transition portion of the 3-dimensional model based on modulus characteristics from analysis of the tow layup design for the transition portion.
46. The method of any one of Clauses 38-45, further comprising at least one of:
   storing the modulus results data on a data storage device accessible to the at least one computing device;
      printing the modulus results data on a printing device accessible to the at least one computing device;
   displaying the modulus results data on a display device accessible to the at least one computing device; and
   sending a message to an operator associated with the at least one computing device providing notice the modulus results data are available and instructions for accessing the modulus results data.
47. A method for analyzing a tow layup design of a unitary composite structure with a closed end geometry, comprising:
   selecting a design data file for the tow layup design of the unitary composite structure with the closed end geometry from a design data file repository;
   processing the design data file on at least one computing device to construct a 3-dimensional model of the unitary composite structure;
   analyzing the 3-dimensional model at the at least one computing device to assess modulus characteristics of the tow layup design;
   generating modulus results data reflecting the modulus characteristics of the tow layup design for the unitary composite structure at the at least one computing device based on the analyzing of the 3-dimensional model; and
   performing at least one of (i) storing the modulus results data on a data storage device accessible to the at least one computing device, (ii) printing the modulus results data on a printing device accessible to the at least one computing device, (iii) displaying the modulus results data on a display device accessible to the at least one computing device and (iv) sending a message to an operator associated with the at least one computing device providing notice the modulus results data are available and instructions for accessing the modulus results data.
48. The method of Clause 47, further comprising:
   determining a first measure of goodness for the modulus results data based on the design data file;
   repeating the selecting, the processing, the analyzing and the generating for a second tow layup design of the unitary composite structure and a second design data file to generate second modulus results data based on the second design data file;
   determining a second measure of goodness for the second modulus results data based on the second design data file;
   comparing the second measure of goodness to the first measure of goodness; and
   selecting an optimized tow layup design for the unitary composite structure from the tow layup design and the second tow layup design based on the comparing.
49. The method of Clause 47 or 48, wherein the at least one computing device is configured to run a 3-dimensional modeling application program in conjunction with the processing of the design data file to construct the 3-dimensional model.
50. The method of Clause 47 wherein the at least one computing device is configured to run a modulus analysis application program in conjunction with the analyzing of the 3-dimensional model to identify the modulus characteristics.
51. The method of any one of Clauses 47-50, a first set of end plies in the design data file comprising:
   a first end ply with first physical characteristics;
   a second end ply with second physical characteristics different from the first physical characteristics;
   a third end ply with third physical characteristics different from the second physical characteristics; and
   a fourth end ply with fourth physical characteristics different from the third physical characteristics.
52. The method of Clause 51, wherein a fiber angle for the first end ply through the fourth end ply comprises an average of 45 degrees.
53. The method of Clause 51 or 52, the first set of end plies further comprising:
   a fifth end ply with fifth physical characteristics different from the fourth physical characteristics.
54. The method of Clause 53, wherein a fiber angle for the first end ply through the fifth end ply comprises an average of 36 degrees.
55. The method of Clause 53 or 54, the first set of end plies further comprising:
   a sixth end ply with sixth physical characteristics different from the fifth physical characteristics.
56. The method of Clause 55, wherein a fiber angle for the first end ply through the sixth end ply comprises an average of 30 degrees.
57. The method of Clause 55 or 56, the first set of end plies further comprising:
   a seventh end ply with seventh physical characteristics different from the sixth physical characteristics; and
   an eighth end ply with eighth physical characteristics different from the seventh physical characteristics.
58. The method of Clause 57, wherein a fiber angle for the first end ply through the eighth end ply comprises an average of 22.5 degrees.

## Claims

1. A method (100) for analyzing a tow layup design (200) of a unitary composite structure (300) with a closed end geometry (302), comprising:
receiving (102) a design data file (402) for the tow layup design (200) of the unitary composite structure (300) with the closed end geometry (302) from a design data file repository (404) via a communication network (406) and a network interface (408) to at least one computing device (410);
processing (104) the design data file (402) at the at least one computing device (410) to construct a 3-dimensional model (414, 3200, 3300, 3400) of the unitary composite structure (300);
analyzing (106) the 3-dimensional model (414, 3200, 3300, 3400) at the at least one computing device (410) to assess modulus characteristics (418) of the tow layup design (200); and
generating (108) modulus results data (420) reflecting the modulus characteristics (418) of the tow layup design (200) for the unitary composite structure (300) at the at least one computing device (410) based on the analyzing (106) of the 3-dimensional model (414, 3200, 3300, 3400).

2. The method of Claim 1, further comprising:
determining (2302) a first measure of goodness for the modulus results data (420) based on the design data file (402);
repeating (2304) the receiving (102), the processing (104), the analyzing (106) and the generating (108) for a second tow layup design of the unitary composite structure (300) and a second design data file to generate second modulus results data based on the second design data file;
determining (2306) a second measure of goodness for the second modulus results data based on the second design data file;
comparing (2308) the second measure of goodness to the first measure of goodness; and
selecting (2310) an optimized tow layup design for the unitary composite structure (300) from the tow layup design (200) and the second tow layup design based on the comparing (2304).

3. The method of any one of the preceding Claims, the unitary composite structure (300) comprising:
an elongated hollow body (304);
the closed end geometry (302); and
a transition region (306) between the elongated hollow body (304) and the closed end geometry (302), preferably wherein:
the tow layup design (200) comprises:
an elongated body layup design (202) comprising a first design data section (204) within the design data file (402) defining multiple sets of elongated body plies for tow layup of the elongated hollow body (304);
a closed end layup design (206) comprising a second design data section (208) within the design data file (402) defining more than one set of end plies for tow layup of the closed end geometry (302); and
a transition layup design (210) comprising a third design data section (212) within the design data file (402) defining integration of the elongated body plies and the end plies.

4. The method of any one of the preceding Claims, wherein the closed end geometry (302) comprises at least one of a dome, a hemispherical dome, an elliptical dome, a semi-elliptical head, a torispherical head and a dished head.

5. The method of any one of the preceding Claims, wherein the unitary composite structure (300) comprises an elongated hollow body (304), the closed end geometry (302) and a transition region (306) between the elongated hollow body (304) and the closed end geometry (302), wherein the elongated hollow body (304) extends longitudinally along a x-axis (308) and a circumference defines an y direction (310), the design data file (402) comprising:
a first design data section (204) defining multiple sets of elongated body plies for tow layup of the elongated hollow body (304);
a second design data section (208) defining more than one set of end plies for tow layup of the closed end geometry (302); and
a third design data section (212) defining integration of the elongated body plies and the end plies in the transition region (306).

6. The method of Claim 5, wherein:
the first design data section (204) comprises:
a set of geometrical dimensions (502) for an elongated body surface (312) of a mandrel (314) used for tow layup of the elongated body plies, the elongated body surface (312) associated with the elongated hollow body (304) of the unitary composite structure (300),
a location of an elongated body polar reference axis (504) on the elongated body surface (312) to define a zero-degree fiber angle (316) for the elongated body plies, and
an elongated body fiber angle (506) for each set of elongated body plies in relation to the elongated body polar reference axis (504); and/or
the third design data section (212) comprises:
a set of geometrical dimensions (518) for a transition region surface (324) of a mandrel (314) used for integrated tow layup of the elongated body plies and the end plies, the transition region surface (324) associated with the transition region (306) of the unitary composite structure (300);
a location of an elongated body polar reference axis (504) on an elongated body surface (312) to define a zero-degree fiber angle (316) for the elongated body plies;
an elongated body fiber angle (506) for each set of elongated body plies in relation to the elongated body polar reference axis (504);
identification of elongated body plies (520) within each set of elongated body plies that extend into the transition region (306);
physical dimensions for portions of the elongated body plies (522) within each set of elongated body plies that extend into the transition region (306);
a location of an end polar reference axis (510) on an end surface (318) to define a zero-degree fiber angle (320) for the end plies;
an end fiber angle (512) for each set of end plies in relation to the end polar reference axis (510);
identification of end plies (524) within each set of end plies that extend into the transition region (306); and
physical dimensions for portions of end plies (526) within each set of end plies that extend into the transition region (306).

7. The method of any one of the preceding Claims, wherein the at least one computing device (410) is configured to run a 3-dimensional modeling application program (412) in conjunction with the processing (104) of the design data file (402) to construct the 3-dimensional model (414, 3200, 3300, 3400).

8. The method of any one of the preceding Claims, wherein the unitary composite structure (300) comprises an elongated hollow body (304), the closed end geometry (302) and a transition region (306) between the elongated hollow body (304) and the closed end geometry (302), wherein the elongated hollow body (304) extends longitudinally along a x-axis (308) and a circumference defines an y direction (310), the processing (104) of the design data file (402) comprising:
generating (602) an elongated hollow portion (702) of the 3-dimensional model (414, 3200, 3300, 3400) for the elongated hollow body (304) based on the design data file (402) defining multiple sets of elongated body plies for tow layup of the elongated hollow body (304);
generating (604) a closed end portion (704) of the 3-dimensional model (414, 3200, 3300, 3400) for the closed end geometry (302) based on the design data file (402) defining more than one set of end plies for tow layup of the closed end geometry (302); and
generating (606) a transition portion (706) of the 3-dimensional model (414, 3200, 3300, 3400) for the transition region (306) based on the design data file (402) defining integration of the elongated body plies and the end plies in the transition region (306), preferably wherein:
the elongated hollow portion (702) of the 3-dimensional model (414, 3200, 3300, 3400) comprises each elongated body ply of each of the multiple sets of elongated body plies and elongated body fiber orientation information for each elongated body ply.

9. The method of any one of the preceding Claims, wherein the at least one computing device (410) is configured to run a modulus analysis application program (412) in conjunction with the analyzing (106) of the 3-dimensional model (414, 3200, 3300, 3400) to identify the modulus characteristics (418).

10. The method of any one of the preceding Claims, wherein the 3-dimensional model (414, 3200, 3300, 3400) of the unitary composite structure (300) comprises an elongated hollow portion (702), a closed end portion (704) and a transition portion (706) between the elongated hollow portion (702) and the closed end portion (704), wherein the elongated hollow portion (702) extends longitudinally along a x-axis (308) and a circumference defines an y direction (310), the analyzing (106) of the 3-dimensional model (414, 3200, 3300, 3400) comprising:
analyzing (802) the elongated hollow portion (702) of the 3-dimensional model (414, 3200, 3300, 3400) based on 3-dimensional representations of each elongated body ply for each of multiple sets of elongated body plies for tow layup of the elongated hollow body (304), each elongated body ply comprising elongated body fiber orientation information;
analyzing (804) the closed end portion (704) of the 3-dimensional model (414, 3200, 3300, 3400) based on 3-dimenational representations of each end ply for each of more than one set of end plies for tow layup of the closed end geometry (302), each end ply comprising end fiber orientation information; and
analyzing (806) the transition portion (706) of the 3-dimensional model (414, 3200, 3300, 3400) based on 3-dimensional representations of each elongated body ply that extends into the transition region (306) and each end ply that extends into the transition region (306), preferably wherein:
the analyzing (802) of the elongated hollow portion (702) of the 3-dimensional model (414, 3200, 3300, 3400) comprises:
dividing (902) the elongated hollow portion (702) into a plurality of lateral elongated body slices (708);
dividing (904) each lateral elongated body slice (708) into a plurality of core samples (710) extending from an elongated body surface (312) through a thickness of the of the elongated hollow portion (702); and
analyzing (906) each core sample (710) of each lateral elongated body slice (708) to determine a collective elongated body fiber orientation for the corresponding core sample (710) and to determine modulus characteristics (418) of the core sample (710) in relation to adjacent core samples (710).

11. The method of any one of the preceding Claims, wherein the 3-dimensional model (414, 3200, 3300, 3400) of the unitary composite structure (300) comprises an elongated hollow portion (702), a closed end portion (704) and a transition portion (706) between the elongated hollow portion (702) and the closed end portion (704), wherein the elongated hollow portion (702) extends longitudinally along a x-axis (308) and a circumference defines an y direction (310), the generating (108) of the modulus results data (420) comprising:
generating (1202) modulus results data (420) for the elongated hollow portion (702) of the 3-dimensional model (414, 3200, 3300, 3400) based on modulus characteristics (418) from analysis of the tow layup design (200) for the elongated hollow portion (702);
generating (1204) modulus results data (420) for the closed end portion (704) of the 3-dimensional model (414, 3200, 3300, 3400) based on modulus characteristics (418) from analysis of the tow layup design (200) for the closed end portion (704); and
generating (1206) modulus results data (420) for the transition portion (706) of the 3-dimensional model (414, 3200, 3300, 3400) based on modulus characteristics (418) from analysis of the tow layup design (200) for the transition portion (706), preferably wherein:
the generating (1202) of the modulus results data (420) for the elongated hollow portion (702) comprises:
arranging (1302) the modulus results data (420) for the elongated hollow portion (702) into a plurality of lateral elongated body slices (708) and a plurality of core samples (710) following a circumference of the corresponding lateral elongated body slice (708), the core samples (710) extending from an elongated body surface (312) through a thickness of the elongated hollow portion (702), and
wherein the modulus results data (420) for each core sample (710) comprises a collective elongated body fiber orientation for the corresponding core sample (710) and modulus characteristics (418) of the core sample (710) in relation to adjacent core samples (710).

12. The method of Claim 11, the generating (1204) of the modulus results data (420) for the closed end portion (704) comprising:
arranging (1402) the modulus results data (420) for the closed end portion (704) into a plurality of lateral end slices (712) and a plurality of core samples (710) following a circumference of the corresponding lateral end slice (712), the core samples (710) extending from an end surface (318) through a thickness of the closed end portion (704), and
wherein the modulus results data (420) for each core sample (710) comprises a collective end fiber orientation for the corresponding core sample (710) and modulus characteristics (418) of the core sample (710) in relation to adjacent core samples (710).

13. The method (1600) of any one of the preceding Claims, further comprising at least one of:
storing (1602) the modulus results data (420) on a data storage device (422) accessible to the at least one computing device (410);
printing (1604) the modulus results data (420) on a printing device (424) accessible to the at least one computing device (410);
displaying (1606) the modulus results data (420) on a display device (426) accessible to the at least one computing device (410); and
sending (1608) a message to an operator associated with the at least one computing device (410) providing notice the modulus results data (420) are available and instructions for accessing the modulus results data (420).

14. A method (1700) for analyzing a tow layup design (200) of a unitary composite structure (300) with a closed end geometry (302), comprising:
selecting (1702) a design data file (402) for the tow layup design (200) of the unitary composite structure (300) with the closed end geometry (302) from a design data file repository (404);
constructing (1704) a 3-dimensional model (414, 3200, 3300, 3400) of the unitary composite structure (300);
analyzing (1706) the 3-dimensional model (414, 3200, 3300, 3400) on at least one computing device (410) to assess modulus characteristics (418) of the tow layup design (200); and
generating (1708) modulus results data (420) reflecting the modulus characteristics (418) of the tow layup design (200) for the unitary composite structure (300) at the at least one computing device (410) based on the analyzing (1706) of the 3-dimensional model (414, 3200, 3300, 3400).

15. A method for analyzing a tow layup design (200) of a unitary composite structure (300) with a closed end geometry (302), comprising:
selecting (2202) a design data file (402) for the tow layup design (200) of the unitary composite structure (300) with the closed end geometry (302) from a design data file repository (404);
processing (2204) the design data file (402) on at least one computing device (410) to construct a 3-dimensional model (414, 3200, 3300, 3400) of the unitary composite structure (300);
analyzing (2206) the 3-dimensional model (414, 3200, 3300, 3400) at the at least one computing device (410) to assess modulus characteristics (418) of the tow layup design (200);
generating (2208) modulus results data (420) reflecting the modulus characteristics (418) of the tow layup design (200) for the unitary composite structure (300) at the at least one computing device (410) based on the analyzing (2206) of the 3-dimensional model (414, 3200, 3300, 3400); and
performing (2210) at least one of (i) storing the modulus results data (420) on a data storage device (422) accessible to the at least one computing device (410), (ii) printing the modulus results data (420) on a printing device (424) accessible to the at least one computing device (410), (iii) displaying the modulus results data (420) on a display device (426) accessible to the at least one computing device (410) and (iv) sending a message to an operator associated with the at least one computing device (410) providing notice the modulus results data (420) are available and instructions for accessing the modulus results data (420).
